# EUROPEAN PATENT APPLICATION

(11) **EP 4 823 223 A1**
(43) Date of publication of application: **14.10.2026**
(21) Application number: 24899051.7
(22) Date of filing: 15.01.2024
(51) Int. Cl.: H04W 76/10

(54) **DATA TRANSMISSION METHOD**

(30) Priority: 04.12.2023 WO PCT/CN2023/136246
(71) Applicant: Shenzhen TCL New Technology Co., Ltd., Shenzhen, Guangdong 518000 (CN)
(72) Inventor: ZHANG, Yincheng, Shenzhen, Guangdong 518000 (CN); TANG, Xiaoyong, Shenzhen, Guangdong 518000 (CN); QU, Miao, Shenzhen, Guangdong 518000 (CN)
(74) Representative: Murgitroyd & Company
(86) International application number: PCT/CN2024/072384
(87) International publication number: WO 2025/118393

(57) **Abstract**

A data transmission method, performed in a first network node of a Radio Access Network (RAN), comprises: receiving a first connection establishment request message related to a first data transmission bearer, wherein the first connection establishment request message comprises identification information of a service type or function type not associated with a UE, or identification information of a plurality of UEs; the first data transmission bearer is for transmitting data between the first network node and a second network node of a Core Network, wherein the data is related to the service type or the function type, or is data related to the plurality of UEs in the RAN; and sending a first connection establishment request response message related to the first data transmission bearer, to establish the first data transmission bearer between the first network node of the RAN and the second network node of the Core Network.

## Description

### TECHNICAL FIELD

The present application relates to the field of wireless communication technologies, and in particular, to a data transmission method.

### BACKGROUND ART

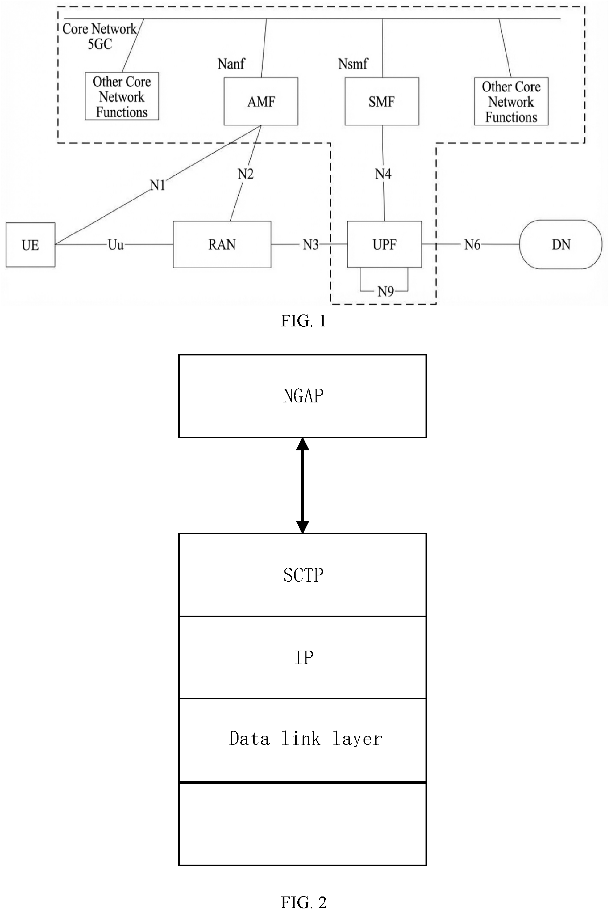

Since 3G, mobile communication networks based on the Third Generation Partnership Project (3GPP) standards have evolved from the third-generation mobile communication dominated by Wideband Code Division Multiple Access (WCDMA), to the fourth-generation mobile communication dominated by Long Term Evolution (LTE), and then to the current fifth-generation mobile communication system architecture mainly characterized by New Radio (NR). These systems are mainly divided into two parts: a Radio Access Network (RAN) and a Core Network (CN). However, the standard interfaces between the RAN and the CN are not the same, which shows the continuous evolution of mobile communication technology. FIG. 1 is a model diagram of a 5G mobile communication system architecture, which mainly includes User Equipment (UE), a Radio Access Network (RAN), and a 5G Core network (5GC). An Access and Mobility Management Function (AMF) and a User Plane Function (UPF) are two network nodes in the 5G Core network (5GC). The RAN is connected to the AMF through an N2 interface, and the RAN is connected to the UPF through an N3 interface. Since the base station gNB is an important logical network node in the RAN and also an interface node for the connection between the RAN and the AMF and UPF 30d, the N2 and N3 interfaces are also the interfaces between the gNB and the AMF and UPF 30d, respectively. At the same time, the N2 and N3 interfaces are collectively referred to as the NG interface, which is the interface between the RAN and the 5GC. The NG interface is functionally divided into a control plane interface (NG-C) and a user plane interface (NG-U), corresponding to the N2 and N3 interfaces, respectively.

The protocol stack of NG-C is shown in FIG. 2, wherein the Data link layer, Physical layer, Internet Protocol (IP), and Stream Control Transmission Protocol (SCTP) of the Transport Layer are all based on existing technologies, while the NG Application Protocol (NGAP) of the Application Layer is the main protocol that embodies the capabilities of NG-C.

The main capabilities provided by NGAP include:
1.Procedures for establishing, maintaining, and releasing Protocol Data Unit (PDU) sessions; wherein a PDU Session defines the association for providing PDU connection services between a UE and a Data Network (DN), and is used to associate all information and resources related to the PDU connection service (including transmission);
2.Procedures for performing handovers within the same Radio Access Technology (RAT) and between different RATs;
3.Differentiating UE-specific signaling management at the protocol level;
4.Transmitting Non-Access Stratum (NAS) messages between the UE and the AMF;
5.A resource reservation mechanism related to packet flows.

In particular, the capabilities provided by NGAP also include the transmission of some special service data, such as transparently transmitting NR Positioning Protocol A (NRPPa, defined in 3GPP TS 38.455) messages, some of which include data related to positioning services.

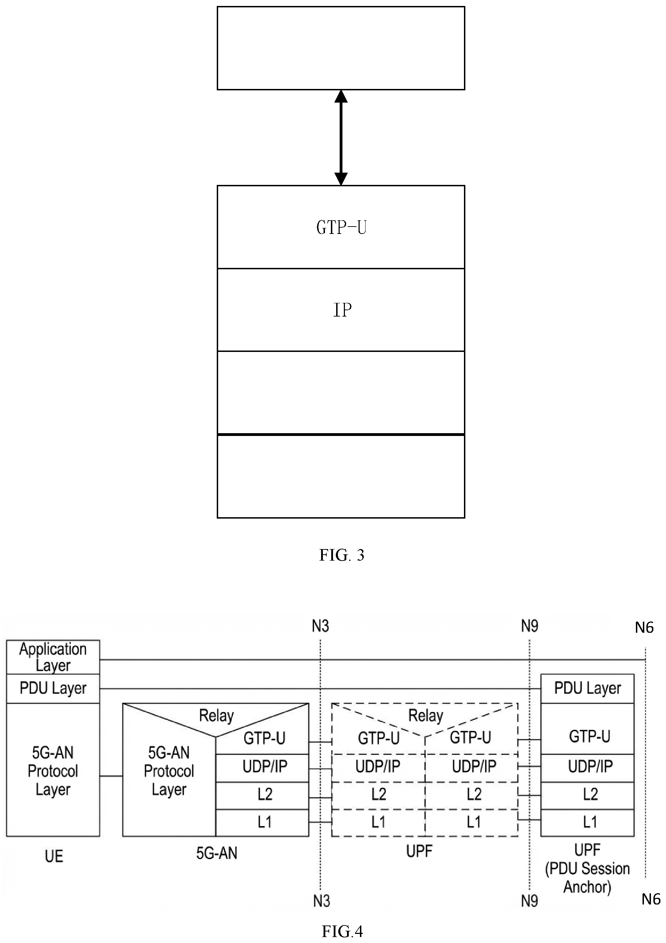

The protocol stack of NG-U is shown in FIG. 3. The Physical layer, Data link layer, IP, User Datagram Protocol (UDP), and General Packet Radio Service (GPRS) Tunneling Protocol-User Plane (GTP-U) are all based on existing technologies. The PDU Session User Plane Protocol is a specific protocol associated with a PDU Session for providing control information elements, such as a Quality of Service (QoS) flow identifier (QFI) and a Reflective QoS Indicator (RQI), for user plane PDUs. The main function of NG-U is to support non-guaranteed delivery of PDU Session user plane PDUs between the RAN and the UPF 30d.

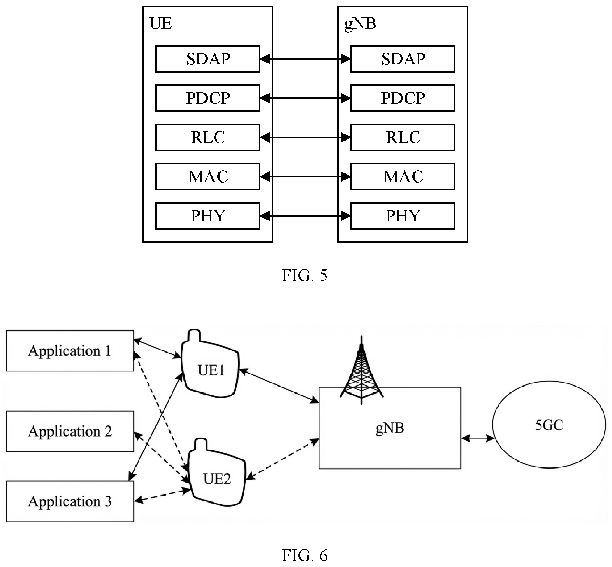

FIG. 4 is a user plane protocol stack of a PDU Session in a 5G mobile communication system. The PDU Session is related to the transmission of PDU Session user plane PDUs between the UE and the DN, and is related to UE services. NG-U, i.e., the user plane part of the NG interface corresponding to N3, is a part of the PDU Session user plane PDU transmission between the UE and the DN. Therefore, NG-U is usually related to UE services. The PDU Session user plane further includes a 5G-AN protocol layer, corresponding to the radio interface (Uu interface) between the UE and the gNB. The protocol stack of the Uu interface is shown in FIG. 5, wherein the Service Data Adaptation Protocol (SDAP), Packet Data Convergence Protocol (PDCP), Radio Link Control (RLC), Medium Access Control (MAC), and Physical layer (PHY) protocol stacks can be found in detail in the relevant 3GPP standard protocols.

### Technical Problem

With the development of technology and service requirements, the demand for data interaction between network nodes of the RAN and network nodes of the CN will increase. For example:
1.Artificial Intelligence (AI) function of the RAN: Interaction between the AI function of the RAN and/or the AI function of the CN, especially regarding data collection and distribution for AI-related tasks, including inference, model monitoring, and model training. The objectives in the SA2 work item description for Rel-19 AI include studying the interaction and coordination between the CN and the RAN to support an AI-enabled RAN.
2.Communication and sensing services: The communication and sensing function is usually performed in the network nodes of the RAN. However, as a service provided by the mobile communication network, the sensing service is usually managed in the CN. Therefore, extensive interaction related to service data occurs between the RAN and the CN.
3.Special broadcast or multicast services: Especially bidirectional multicast services based on a unicast mode, because the broadcast or multicast currently supported by 5G are usually unidirectional downlink services. A typical application is shown in FIG. 6, where UE1 and UE2 provide a hot backup function for high-reliability bidirectional real-time services at the Radio Access Network (RAN) layer. The downlink is similar to multicast, while the uplink is a new service form. Therefore, there will be new service data interaction requirements between the RAN and the CN.

Typically, the requirements of the aforementioned services or functions involve data interaction between RAN and CN nodes, which includes information associated with a User Equipment (UE) and information not associated with a UE (non-UE-associated). This non-UE-associated information may involve cells, RAN nodes, or specific services. However, the current 5G mobile communication system still cannot effectively support these service requirements, especially services involving non-UE-associated data.

Specifically, on the one hand, in 5G and previous mobile communication systems, the RAN node (gNB) does not support a user plane data transmission bearer technology for bidirectional service data that is non-UE-associated or associated with a plurality of UEs. The interface between the RAN node (gNB) and the CN node also does not support a user plane data transmission bearer technology for bidirectional service data that is non-UE-associated or associated with a plurality of UEs. Furthermore, the exchange of bidirectional service data that is non-UE-associated or associated with a plurality of UEs using a user plane data transmission bearer technology is not supported between internal nodes of the core network, nor between core network nodes and the Data Network (DN). On the other hand, as service requirements and types continue to increase, there is also a need to enhance the existing control plane messaging scheme on the interface between the RAN node (gNB) and the CN node, which supports non-UE-associated or UE-associated service data transmission, to support more types of service data, and in particular, to provide a general and extensible control plane messaging scheme for service data transmission.

The aforementioned requirements for data interaction related to services or functions, and the related problems, also exist between RAN nodes. In the 5G mobile communication system, RAN nodes are connected through the Xn interface. The Xn interface is also functionally divided into a control plane interface (Xn Interface Control Plane, Xn-C) and a user plane interface (Xn Interface User Plane, Xn-U). The transport layer protocol of Xn-C is identical to that of NG-C, and the application layer protocol of Xn-C is Xn Application Protocol (XnAP). The transport layer protocol stack of Xn-U is identical to that of NG-U, i.e., it includes GTP-U, UDP, IP, a Data link layer, and a Physical layer.

In addition, the aforementioned requirements for data interaction related to services or functions, and the related problems, also exist between different nodes within the RAN. In the 5G mobile communication system, a gNB node of the RAN can be further divided into two network nodes: a gNB Central Unit (gNB-CU) and a gNB Distributed Unit (gNB-DU). The gNB-CU and the gNB-DU are connected through an F1 interface. The F1 interface is also functionally divided into a control plane interface (F1 Interface Control Plane, F1-C) and a user plane interface (F1 Interface User Plane, F1-U). The transport layer protocol of F1-C is identical to that of NG-C, and the application layer protocol of F1-C is F1 Application Protocol (F1AP). The transport layer protocol stack of F1-U is identical to that of NG-U, i.e., it includes GTP-U, UDP, IP, a Data link layer, and a Physical layer.

### Technical Solution

An object of the present disclosure is to provide a data transmission method, a user equipment, and a base station.

In a first aspect, the present invention provides a data transmission method performed by a first network node of a Radio Access Network (RAN), the method comprising:
receiving a first connection establishment request message related to a first data transmission bearer, for establishing the first data transmission bearer, wherein the first connection establishment request message comprises identification information of a non-User Equipment (UE) associated service type or function type, or identification information of a plurality of UEs, the first data transmission bearer is used for transmitting data between the first network node and a second network node, and the data is data related to the service type or the function type, or data related to the plurality of UEs in the RAN; and
sending a first connection establishment request response message associated with the first data transmission bearer to establish the first data transmission bearer between the first network node of the RAN and the second network node.

In a second aspect, an embodiment of the present invention provides a network node, comprising a processor and a memory, wherein the processor is configured to retrieve and execute a computer program stored in the memory to cause a device in which the processor is installed to perform the method disclosed herein.

In a third aspect, an embodiment of the present invention provides a data transmission method performed in a data transmission system, the method comprising:
a third network node sending a first connection establishment request message related to a first data transmission bearer to a first network node, to establish the first data transmission bearer between the first network node and a second network node, wherein the first connection establishment request message comprises identification information of a non-UE associated service type or function type, or identification information of a plurality of UEs; the first network node sending a first connection establishment request response message related to the first data transmission bearer to the third network node;
the third network node sending a second connection establishment request message related to the first data transmission bearer, a second data transmission bearer, and/or a third data transmission bearer to a fourth network node, wherein the second data transmission bearer is used for representing a bearer between the second network node and a fifth network node, the third data transmission bearer is used for representing a bearer between the second network node and a sixth network node, and the first data transmission bearer, the second data transmission bearer, and the third data transmission bearer are all used for transmitting data related to the non-UE associated service type or function type, or data of the plurality of UEs;
the fourth network node sending a third connection establishment request message related to the first data transmission bearer to the third network node; and
the fourth network node sending a fourth connection establishment request message related to the first data transmission bearer, the second data transmission bearer, and/or the third data transmission bearer to the second network node, to establish the first data transmission bearer, the second data transmission bearer, and/or the third data transmission bearer.

In a fourth aspect, the present invention provides a data transmission method performed by a first network node of a Radio Access Network (RAN), the method comprising:
receiving or sending a protocol transmission message, wherein a Protocol Data Unit (PDU) is carried in the protocol transmission message; and wherein a type of the protocol transmission message and a type of the PDU both correspond to a service type or a function type.

In a fifth aspect, an embodiment of the present invention provides a network node, comprising a processor and a memory, wherein the processor is configured to retrieve and execute a computer program stored in the memory to cause a device in which the processor is installed to perform the method disclosed herein.

In a sixth aspect, an embodiment of the present invention provides a data transmission system, the system comprising:
a first network node, a second network node, a third network node, a fourth network node, and a fifth network node, wherein,
the first network node is configured to receive a first connection establishment request message related to a first data transmission bearer, wherein the first data transmission bearer is used for representing a bearer between the first network node and the second network node;
the second network node is configured to receive a fourth connection establishment request message related to the first data transmission bearer, a second data transmission bearer, and/or a third data transmission bearer; wherein the second data transmission bearer is used for representing a bearer between the second network node and the fifth network node, and the third data transmission bearer is used for representing a bearer between the second network node and a sixth network node;
the third network node is configured to send the first connection establishment request message related to the first data transmission bearer to the first network node, to establish the first data transmission bearer between the first network node and the second network node, wherein the first connection establishment request message comprises identification information of a non-UE associated service type or function type, or identification information of a plurality of UEs; the first network node sends a first connection establishment request response message related to the first data transmission bearer to the third network node; the third network node sends a second connection establishment request message related to the first data transmission bearer, the second data transmission bearer, and/or the third data transmission bearer to the fourth network node, wherein the first data transmission bearer, the second data transmission bearer, and the third data transmission bearer are all used for transmitting data related to the non-UE associated service type or function type, or data of the plurality of UEs;
the fourth network node is configured to send a third connection establishment request message related to the first data transmission bearer to the third network node, send the fourth connection establishment request message related to the first data transmission bearer, the second data transmission bearer, and/or the third data transmission bearer to the second network node to establish the first data transmission bearer, the second data transmission bearer, and/or the third data transmission bearer, and send a fifth connection establishment request message related to the second data transmission bearer to the fifth network node to establish the second data transmission bearer; and
the fifth network node is configured to receive the fifth connection establishment request message related to the second data transmission bearer.

The method disclosed herein may be implemented as computer-executable instructions stored on a non-transitory computer-readable medium. The non-transitory computer-readable medium, when loaded into a computer, instructs a processor of the computer to perform the method disclosed herein.

The non-transitory computer-readable medium may include at least one selected from the group consisting of: a hard disk, a CD-ROM, an optical storage device, a magnetic storage device, a read-only memory (ROM), a programmable read-only memory (PROM), an Erasable Programmable Read Only Memory (EPROM), an Electrically Erasable Programmable Read Only Memory (EEPROM), and a flash memory.

The method disclosed herein may be implemented as a computer program product, wherein the computer program product causes a computer to perform the method disclosed herein.

The method disclosed herein may be implemented as a computer program, wherein the computer program causes a computer to perform the method disclosed herein.

### Advantageous Effects

Some embodiments of the present invention implement a first data transmission bearer and a second data transmission bearer between a network node of a Radio Access Network (RAN) and a Core Network Service Management Function (CNSMF) node. The first data transmission bearer and the second data transmission bearer are for transmitting data destined for or originating from a network node (non-UE) of the RAN. This provides an establishment mechanism for a non-UE data transmission bearer and enables non-UE data transmission between a core network node and a RAN network node based on this user-plane data transmission bearer. Such a mechanism can be applied to, for example, Artificial Intelligence (AI) data transmission, radio sensing service data, NG-RAN Positioning Protocol A (NRPPa) data transmission as defined in 3GPP TS 38.455, or some newly defined data transmission.

Some embodiments of the present invention implement a first data transmission bearer and a third data transmission bearer between a RAN network node and a Data Network (DN) node. The first data transmission bearer and the third data transmission bearer are for transmitting data destined for or originating from a RAN network node (non-UE). This provides an establishment mechanism for a non-UE data transmission bearer and enables non-UE data transmission between a data network node and a RAN network node based on this user-plane data transmission bearer. Such a mechanism can provide the capability for more Internetbased third-party applications to access specific functions and services of RAN network nodes.

Some embodiments of the present invention implement a first data transmission bearer and a third data transmission bearer between a plurality of user equipments (UEs) in the RAN and a Data Network (DN) node, wherein the first data transmission bearer and the third data transmission bearer are for transmitting bidirectional uplink and downlink data multicast destined for or originating from the plurality of UEs in the RAN. This can provide downlink data multicast based on multiple UEs and a wireless link backup mechanism for selected UEs in the uplink.

Some embodiments of the present invention implement data interaction between a Radio Access Network (RAN) node and an Access and Mobility Management Function (AMF) of the core network based on control plane messages. Subsequently, data interaction is performed with a core network node related to the service or function via the AMF, thereby implementing a specific service and function in the mobile communication system. The data for the data interaction relates to artificial intelligence (AI), the radio sensing (RS) function of the RAN, or the Core Network Service Management Function (CNSMF).

### BRIEF DESCRIPTION OF DRAWINGS

One or more embodiments are exemplarily illustrated by the figures in the accompanying drawings. These exemplary illustrations do not constitute a limitation on the embodiments. In the drawings, elements with the same reference numerals denote similar elements. Unless otherwise specified, the figures in the drawings are not drawn to scale. The division of the following embodiments is for convenience of description and should not constitute any limitation on the specific implementations of the present invention. The various embodiments can be combined and cross-referenced with each other without conflict. In particular, a user plane connection can also be a data transmission bearer.
FIG. 1 is a schematic diagram of an architecture model of a 5th Generation (5G) mobile communication system.
FIG. 2 is a schematic diagram of a protocol stack of NG-C.
FIG. 3 is a schematic diagram of a protocol stack of NG-U.
FIG. 4 is a schematic diagram of a user plane protocol stack for a Protocol Data Unit (PDU) Session in a 5G mobile communication system.
FIG. 5 is a schematic diagram of a protocol stack of a Uu interface.
FIG. 6 is a schematic diagram of a bidirectional multicast service based on a unicast mode.
FIG. 7 is a schematic diagram of a telecommunication system for implementing a method disclosed in an embodiment of the present invention.
FIG. 8 illustrates a data transmission method according to an embodiment of the present invention.
FIG. 9 illustrates a data transmission method according to another embodiment of the present invention.
FIG. 10 illustrates a data transmission method according to another embodiment of the present invention.
FIG. 11 illustrates a data transmission method according to another embodiment of the present invention.
FIG. 12 illustrates a data transmission method according to another embodiment of the present invention.
FIG. 13 illustrates data interaction between a Radio Access Network (RAN) and a Network Data Analytics Function (NWDAF) through an Access and Mobility Management Function (AMF) network node.
FIG. 14 is a schematic diagram of an N-AI interface between an AMF and an NWDAF.
FIG. 15 illustrates a downlink User Equipment (UE) associated AI-P transport (DOWNLINK UE ASSOCIATED AI-P TRANSPORT).
FIG. 16 illustrates an uplink UE associated AI-P transport (UPLINK UE ASSOCIATED AI-P TRANSPORT).
FIG. 17 illustrates a downlink non-UE associated AI-P transport (DOWNLINK NON UE ASSOCIATED AI-P TRANSPORT).
FIG. 18 illustrates an uplink non-UE associated AI-P transport (UPLINK NON UE ASSOCIATED AI-P TRANSPORT).
FIG. 19 illustrates data interaction between a RAN and a Radio Sensing Management Function (RSMF) node through an AMF network node.
FIG. 20 is a schematic diagram of an N-RS interface.
FIG. 21 illustrates a downlink UE associated RS-P transport (DOWNLINK UE ASSOCIATED RS-P TRANSPORT).
FIG. 22 illustrates an uplink UE associated RS-P transport (UPLINK UE ASSOCIATED RS-P TRANSPORT).
FIG. 23 illustrates a downlink non-UE associated RS-P transport (DOWNLINK NON UE ASSOCIATED RS-P TRANSPORT).
FIG. 24 illustrates an uplink non-UE associated RS-P transport (UPLINK NON UE ASSOCIATED RS-P TRANSPORT).
FIG. 25 illustrates data interaction between a RAN and a Core Network Service Management Function (CNSMF) through an AMF network node.
FIG. 26 is a schematic diagram of an N-CNS interface.
FIG. 27 illustrates a downlink UE associated common service data transport (DOWNLINK UE ASSOCIATED common service data TRANSPORT).
FIG. 28 illustrates an uplink UE associated common service data transport (UPLINK UE ASSOCIATED common service data TRANSPORT).
FIG. 29 illustrates a downlink non-UE associated common service data transport (DOWNLINK NON UE ASSOCIATED COMMON SERVICE DATA TRANSPORT).
FIG. 30 illustrates an uplink non-UE associated common service data transport (UPLINK NON UE ASSOCIATED COMMON SERVICE DATA TRANSPORT).
FIG. 31 illustrates data interaction between a RAN and a CNSMF through a User Plane Function (UPF) network node.
FIG. 32 is a schematic diagram of a user plane connection based on a Transmission Control Protocol (TCP) on an N-SP interface.
FIG. 33 is a schematic diagram of a user plane connection based on a General Packet Radio Service Tunneling Protocol-User Plane (GTP-U) on an N-SP interface.
FIG. 34 illustrates relevant signaling and a flow for establishing a user plane connection for NG-U (N3) and N-SP interfaces.
FIG. 35 illustrates relevant signaling and a flow for establishing a user plane connection for NG-U (N3) and N-SP interfaces.
FIG. 36 illustrates data interaction between a RAN and a Data Network (DN).
FIG. 37 is a schematic diagram of a protocol stack of a user plane connection between a RAN and a DN.
FIG. 38 illustrates a relevant signaling flow for an NG-U (N3) user plane connection in establishing a user plane connection between a RAN and a DN.
FIG. 39 illustrates a relevant signaling flow for an NG-U (N3) user plane connection in establishing a user plane connection between a RAN and a DN.
FIG. 40 is a schematic diagram of a group UE service between multiple UEs and a DN.
FIG. 41 illustrates relevant signaling and a flow for establishing a user plane connection for a group UE service.
FIG. 42 illustrates relevant signaling and a flow for establishing a user plane connection for a group UE service.
FIG. 43 is a schematic diagram illustrating a mapping between a Quality of Service (QoS) flow and a Data Radio Bearer (DRB) on a Uu interface, associated with a RAN-UPF user plane (RAN-UPF UP) connection.
FIG. 44 is a schematic diagram illustrating an Xn interface (including Xn^{-C} and Xn^{-U}) established between RAN nodes.
FIG. 45 illustrates a control plane signaling flow and messages between RAN nodes.
FIG. 46 is a schematic diagram illustrating the establishment of a user plane connection, associated with a specific service or function, on an NG-U interface (i.e., N3) between multiple RAN nodes and a UPF 30d of a core network.
FIG. 47 illustrates a signaling flow and messages for interaction between multiple RAN nodes through a core network.
FIG. 48 is a schematic diagram illustrating an F1 interface (including F1-C and F1-U) established between a gNodeB-Centralized Unit (gNB-CU) and a gNodeB-Distributed Unit (gNB-DU).
FIG. 49 illustrates a control plane signaling flow and messages between a gNB-CU and a gNB-DU.
FIG. 50 is a schematic diagram of a chip according to the present invention.

### DETAILED DESCRIPTION OF EMBODIMENTS

To make the objectives, technical solutions, and advantages of the present disclosure clearer, some embodiments of the present disclosure are further described in detail below with reference to the accompanying drawings and embodiments. It should be understood that the specific embodiments described herein are only for explaining the present disclosure and are not intended to be limiting.

To support a variety of new services, control plane or user plane functions are added on the interface between a Radio Access Network (RAN) and a Core Network (CN). Specifically:
On the control plane, corresponding control plane procedures are added for new services.

On the user plane, new user plane connection types are added for new services, and new control plane procedures are added or existing control procedures are enhanced to support the establishment of the new user plane connection types.

In particular, the user plane connection mentioned in the present disclosure may also be a data transmission bearer, a user plane bearer, a GPRS Tunneling Protocol-User Plane (GTP-U) connection, a GTP-U transport bearer, or a Data Radio Bearer (DRB).

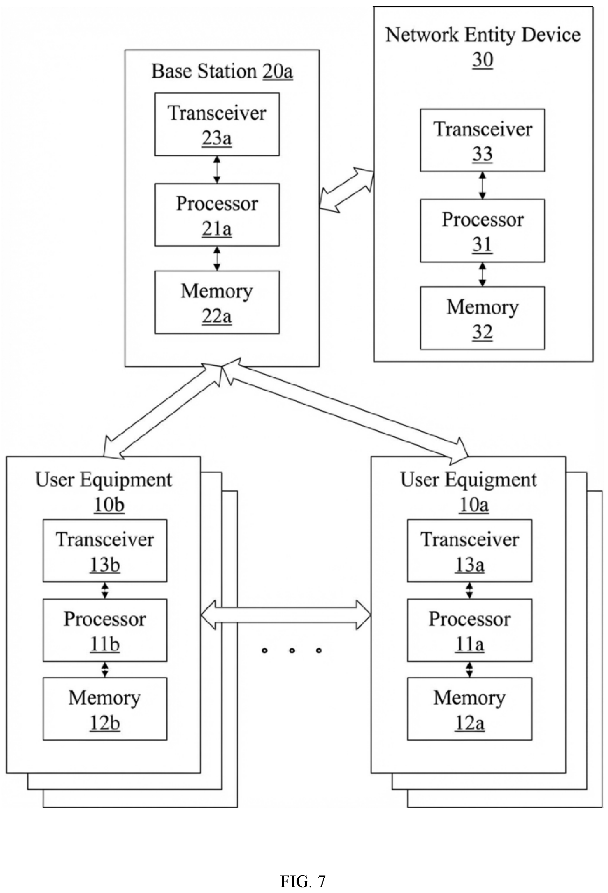

The data transmission method may be performed in a telecommunication system as shown in FIG. 7. Network functions such as a Network Data Analytics Function (NWDAF) 30a, an Access and Mobility Management Function (AMF) 30b, a Session Management Function (SMF) 30c, a User Plane Function (UPF) 30d, a RAN Service Management Function (RSMF) 10e, an RSMF 10f, and a Data Network (DN) 40 described in embodiments of the present disclosure may be performed in one or more network nodes such as the network entity device 30. The RAN 20 of embodiments of the present disclosure may include an embodiment of the base station 20a.

Referring to FIG. 7, a telecommunication system including a User Equipment (UE) 10a, a UE 10b, a base station (BS) 20a, and a network entity device 30 performs the disclosed method according to an embodiment of the present disclosure. FIG. 7 is illustrative and not limiting, and the system may include more UEs, BSs, and CN entities. Connections between devices and device components are shown as lines and arrows in the figure. The UE 10a may include a processor 11a, a memory 12a, and a transceiver 13a. The UE 10b may include a processor 11b, a memory 12b, and a transceiver 13b. The base station 20a may include a processor 21a, a memory 22a, and a transceiver 23a. The network entity device 30 may include a processor 31, a memory 32, and a transceiver 33. Each of the processors 11a, 11b, 21a, and 31 may be configured to implement the functions, procedures, and/or methods described in the description. Layers of a radio interface protocol may be implemented in the processors 11a, 11b, 21a, and 31. Each of the memories 12a, 12b, 22a, and 32 operably stores various programs and information to operate a connected processor. Each of the transceivers 13a, 13b, 23a, and 33 is operably coupled to a connected processor to transmit and/or receive radio signals or wired signals. The UE 10a may communicate with the UE 10b via a sidelink. The base station 20a may be one of an eNB, a gNB, or another type of radio node, and may configure radio resources for the UE 10a and the UE 10b.

Each of the processors 11a, 11b, 21a, and 31 may include an Application-Specific Integrated Circuit (ASIC), another chipset, a logic circuit, and/or a data processing device. Each of the memories 12a, 12b, 22a, and 32 may include Read-Only Memory (ROM), Random Access Memory (RAM), flash memory, a memory card, a storage medium, and/or another storage device. Each of the transceivers 13a, 13b, 23a, and 33 may include baseband circuitry and Radio Frequency (RF) circuitry to process RF signals. When this embodiment is implemented in software, the techniques described herein may be implemented by modules, procedures, functions, entities, etc. that perform the functions described herein. These modules may be stored in a memory and executed by a processor. The memory may be implemented within the processor or external to the processor, where the memory may be communicatively coupled to the processor by various means known in the art.

The network entity device 30 may be a node in the CN. The CN may include an LTE CN or a 5G Core (5GC), which includes a User Plane Function (UPF), a Session Management Function (SMF), an Access and Mobility Management Function (AMF), Unified Data Management (UDM), a Policy Control Function (PCF), Control Plane (CP)/User Plane (UP) separation (CUPS), an Authentication Server Function (AUSF), a Network Slice Selection Function (NSSF), and a Network Exposure Function (NEF). Network functions such as the NWDAF 30a, AMF 30b, SMF 30c, UPF 30d, RSMF 10e, RSMF 10f, and DN 40 described in embodiments of the present disclosure may be performed in one or more of the network entity devices 30.

In embodiments of the present disclosure, a base station may be an entity for sending or receiving information, such as a gNB. The base station may also be an eNodeB, a Transmission Reception Point (TRP), a NodeB in next-generation communications, or an access point in a Wireless Local Area Network (e.g., Wi-Fi).

A UE is an entity at the user end for sending or receiving information, such as a mobile phone UE. A UE may also be called a terminal, a mobile station, or a mobile terminal. The UE may be a mobile phone, a tablet (PAD), a Virtual Reality (VR) device, an Augmented Reality (AR) device, an industrial control wireless terminal, an autonomous driving wireless terminal, a remote medical wireless terminal, a smart grid wireless terminal, a traffic safety wireless terminal, a smart city wireless terminal, a smart home wireless terminal, etc.

In addition, terminals and base stations may be deployed on land, including indoors, outdoors, handheld, or vehicle-mounted, and may also be deployed on water, in the air, on aircraft, drones, or satellites.

Examples of UEs in this description (e.g., UE 10, UE1, UE2, to UEn) may include one of the UE 10a or UE 10b. Examples of base stations in this description may include the base station 20a. An Uplink (UL) transmission of control signals or data may be a transmission operation from a UE to a base station. A Downlink (DL) transmission of control signals or data may be a transmission operation from a base station to a UE. A DL control signal may include Downlink Control Information (DCI) or a Radio Resource Control (RRC) signal from a base station to a UE.

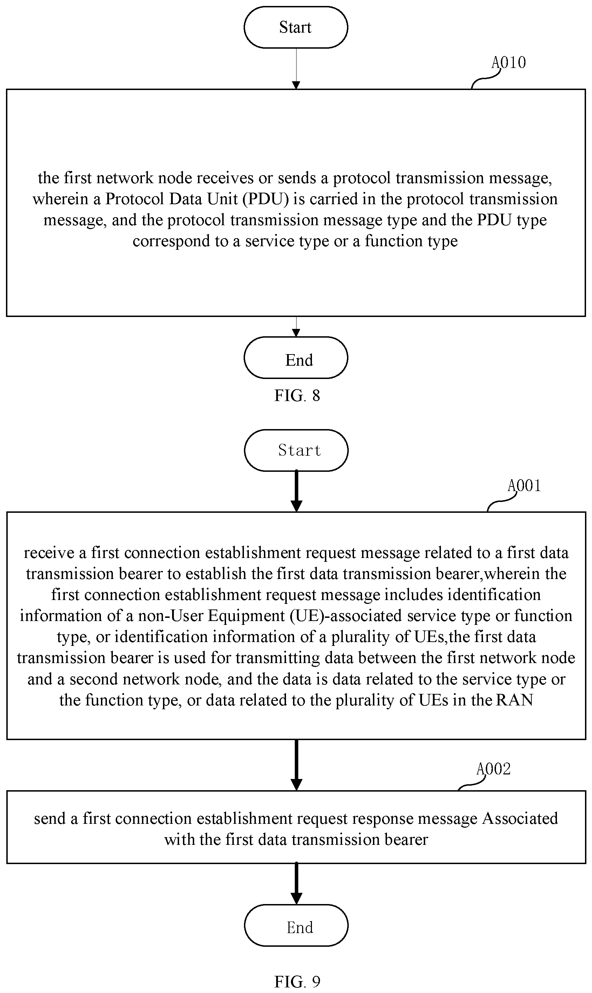

Referring to FIG. 8, a data transmission method is performed in a first network node of a Radio Access Network (RAN). For example, the first network node receives or sends a protocol transmission message, wherein a Protocol Data Unit (PDU) is carried in the protocol transmission message, and the protocol transmission message type and the PDU type correspond to a service type or a function type (A010).

In some embodiments of the present disclosure, the protocol transmission message comprises a message type element, and the message type element is used to indicate the service type or the function type corresponding to the protocol transmission message.

In some embodiments of the present disclosure, the protocol transmission message comprises a message type element and a service type element, and the service type element is used to indicate the service type or the function type corresponding to the protocol transmission message.

In some embodiments of the present disclosure, the protocol transmission message is a User Equipment (UE)-associated or non-UE-associated protocol transmission message, wherein the message type element in the protocol transmission message indicates whether the protocol transmission message is UE-associated or non-UE-associated.

In some embodiments of the present disclosure, the message type element in the protocol transmission message indicates whether the protocol transmission message is a received message or a sent message.

In some embodiments of the present disclosure, the UE-associated protocol transmission message further comprises identification information of the UE in the first network node and identification information of the UE in a network node for access and mobility management.

In some embodiments of the present disclosure, the protocol transmission message further comprises routing identification information, wherein the routing identification information is used to identify a network node for service management in the Core Network that corresponds to the service type or the function type.

In some embodiments of the present disclosure, the first network node is a base station of the RAN;
the network node for access and mobility management is an Access and Mobility Management Function (AMF); and
the network node for service management is a Core Network Service Management Function (CNSMF).

Referring to FIG. 9, note that although the RAN 20 is described as an example, the wireless communication method may be performed by a base station, such as a gNB, an eNB, a base station integrating an eNB and a gNB, or a base station for beyond-5G technology. The UE 10 may include an embodiment of a UE 10a or a UE 10b. In step A001, a first network node of a Radio Access Network (RAN) receives a first connection establishment request message related to a first data transmission bearer to establish the first data transmission bearer. The first connection establishment request message comprises identification information of a non-User Equipment (UE)-associated service type or function type, or identification information of a plurality of UEs. The first data transmission bearer is used to transmit data between the first network node and a second network node, wherein the data is related to the service type or the function type, or is data related to the plurality of UEs in the RAN.

In step A002, the first network node of the RAN sends a first connection establishment request response message related to the first data transmission bearer to establish the first data transmission bearer between the first network node of the RAN and the second network node of the Core Network.

In some embodiments of the present disclosure, the first network node is a base station or a Distributed Unit (DU) of a base station of the RAN; the second network node is a User Plane Function (UPF) of the Core Network, a base station of the RAN, or a Centralized Unit (CU) of a base station of the RAN.

In some embodiments of the present disclosure, the first data transmission bearer is a user plane transmission bearer, and may also be a transmission bearer based on the GPRS Tunneling Protocol-User Plane (GTP-U) protocol.

In some embodiments of the present disclosure, the first connection establishment request message further comprises at least one of the following:
identification or address information of the first network node;
identification or address information of the second network node of the Core Network or the base station of the RAN;
endpoint information of the second network node for a transmission bearer related to the first data transmission bearer; and
data rate and Quality of Service (QoS) requirement information related to the first data transmission bearer.

In some embodiments of the present disclosure, the first connection establishment request response message comprises at least one of the following:
identification or address information of the first network node;
identification or address information of the second network node; and
endpoint information of the first network node for a transmission bearer related to the first data transmission bearer.

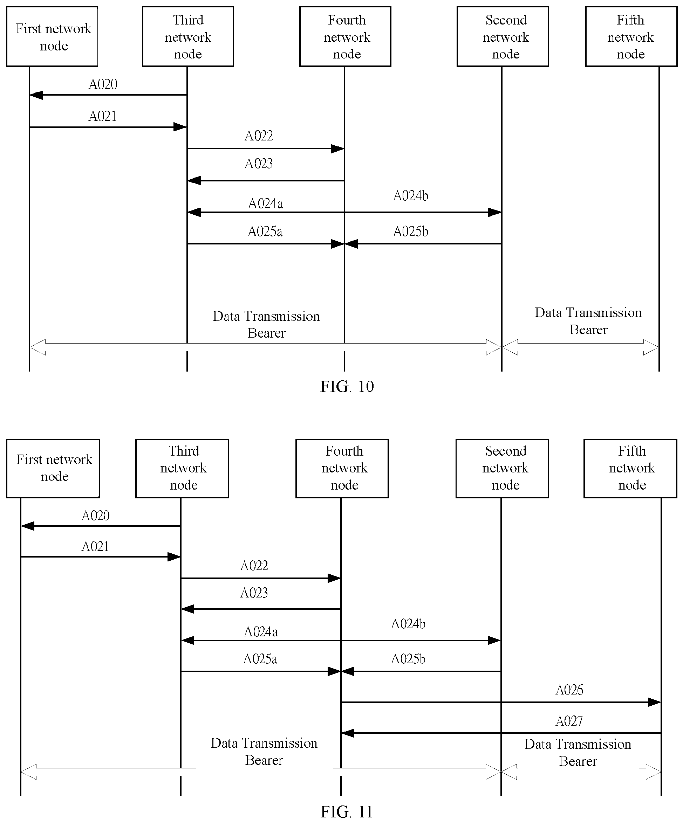

Referring to FIG. 10, a data transmission method is performed in a data transmission system.

Step A020: A third network node (e.g., an AMF) sends a first connection establishment request message related to a first data transmission bearer to a first network node (e.g., a gNB) to establish the first data transmission bearer between the first network node (e.g., the gNB) and a second network node (e.g., a UPF). The first connection establishment request message comprises identification information of a non-UE-associated service type or function type, or identification information of a plurality of UEs. The first network node (e.g., the gNB) sends a first connection establishment request response message related to the first data transmission bearer to the third network node (e.g., the AMF).

Step A021: The first network node (e.g., the gNB) sends a first connection establishment response message to the third network node (e.g., the AMF).

Step A022: The third network node (e.g., Access and Mobility Management Function (AMF)) sends a second connection establishment request message related to the first data transmission bearer, the second data transmission bearer, and/or the third data transmission bearer to a fourth network node (e.g., Session Management Function (SMF)), wherein the second data transmission bearer is a bearer between the second network node (e.g., User Plane Function (UPF)) and a fifth network node (e.g., Core Network Service Management Function (CNSMF)), the third data transmission bearer is a bearer between the second network node (e.g., UPF) and a sixth network node (e.g., Data Network (DN)), and the first data transmission bearer, the second data transmission bearer, and the third data transmission bearer are used to transmit data related to a service type or function type not associated with a User Equipment (UE), or data of the plurality of UEs.

Step A023: The fourth network node (e.g., SMF) sends a second connection establishment response message related to the first data transmission bearer, the second data transmission bearer, and/or the third data transmission bearer to the third network node (e.g., AMF). The second connection establishment response message may be combined with a third connection establishment request message into a single message.

Step A024a: The fourth network node (e.g., SMF) sends a third connection establishment request message related to the first data transmission bearer to the third network node (e.g., AMF).

Step A025a: The third network node (e.g., AMF) sends a third connection establishment response message related to the first data transmission bearer to the fourth network node (e.g., SMF).

Step A024b: The fourth network node (e.g., SMF) sends a fourth connection establishment request message related to the first data transmission bearer, the second data transmission bearer, and/or the third data transmission bearer to the second network node (e.g., UPF), to establish the first data transmission bearer, the second data transmission bearer, and/or the third data transmission bearer.

Step A025b: The second network node (e.g., UPF) sends a fourth connection establishment response message related to the first data transmission bearer, the second data transmission bearer, and/or the third data transmission bearer to the fourth network node (e.g., SMF).

Referring to FIG. 11, in some embodiments of the present invention, the data transmission method further comprises:
Step A026: The fourth network node (e.g., SMF) sends a fifth connection establishment request message related to the second data transmission bearer to the fifth network node (e.g., CNSMF), to establish the second data transmission bearer.
Step A027: The fifth network node (e.g., CNSMF) sends a fifth connection establishment response message related to the second data transmission bearer to the fourth network node (e.g., SMF).

In some embodiments of the present invention, the second connection establishment request message, the third connection establishment request message, the fourth connection establishment request message, and the fifth connection establishment request message include identification information of the service type or the function type, or identification information of the plurality of UEs.

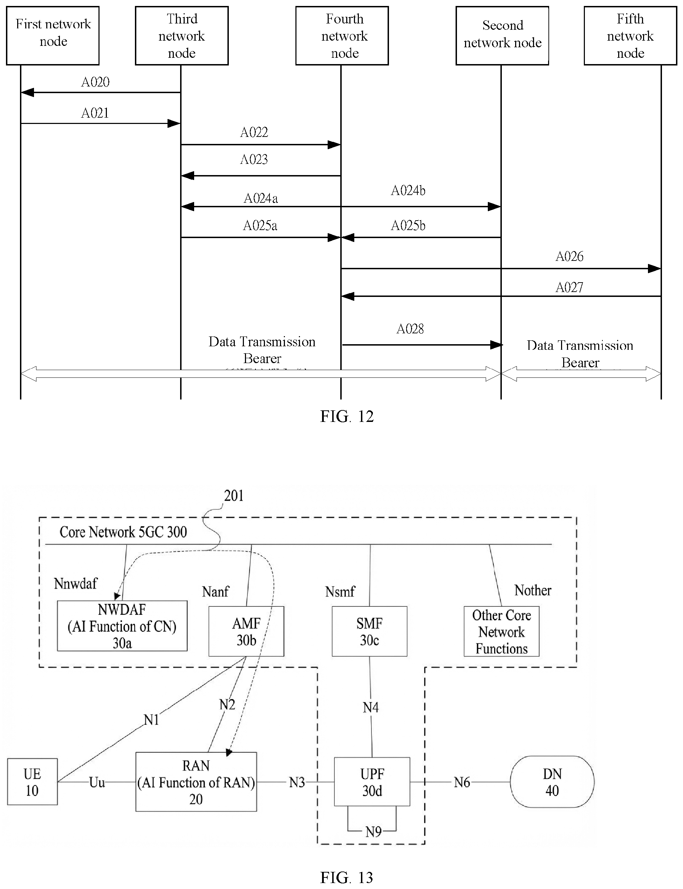

Referring to FIG. 12, in some embodiments of the present invention, the data transmission method further comprises:
Step A028: The fourth network node sends a fourth connection establishment complete message related to the first data transmission bearer, the second data transmission bearer, and/or the third data transmission bearer to the second network node, to complete the establishment of the first data transmission bearer, the second data transmission bearer, and/or the third data transmission bearer.

In some embodiments of the present invention, the first network node is a base station of the Radio Access Network (RAN);
the second network node is a User Plane Function (UPF);
the third network node is an Access and Mobility Management Function (AMF);
the fourth network node is a Session Management Function (SMF);
the fifth network node is a Core Network Service Management Function (CNSMF);
the sixth network node is a network node of a Data Network (DN).

In some embodiments of the present invention, the first data transmission bearer is a user plane transmission bearer; wherein the user plane transmission bearer is a transmission bearer based on the General Packet Radio Service Tunneling Protocol-User Plane (GTP-U) protocol.

In some embodiments of the present invention, the second data transmission bearer is a user plane transmission bearer; wherein the user plane transmission bearer is a transmission bearer based on the GTP-U protocol, a transmission bearer based on the Transmission Control Protocol (TCP), or a transmission bearer based on the Hypertext Transfer Protocol (HTTP).

In some embodiments of the present invention, the third data transmission bearer is a user plane transmission bearer; wherein the user plane transmission bearer is a transmission bearer based on the GTP-U protocol, a transmission bearer based on the TCP, a transmission bearer based on the User Datagram Protocol (UDP), or a transmission bearer based on the Hypertext Transfer Protocol Secure (HTTPS).

In some embodiments of the present invention, the second connection establishment request message (e.g., RAN-UPF UP connection and UPF-CNSMF UP connection establishment request message) includes at least one of the following: identification or address information of the network node (e.g., gNB) of the Radio Access Network (RAN), identification or address information of the Access and Mobility Management Function (AMF), identification or address information of the Session Management Function (SMF), identification or address information of the CNSMF network node, identification or address information of the User Plane Function (UPF), identification or address information related to the Data Network (DN), and service-related information for the first data transmission bearer, the second data transmission bearer, and/or the third data transmission bearer.

In some embodiments of the present invention, the third connection establishment request message (e.g., RAN-UPF UP connection and UPF-CNSMF UP connection establishment request message) (e.g., step 5a of corresponding Embodiment 4 or 5 or step 3a of Embodiment 6) includes at least one of the following: identification or address information of the network node (e.g., gNB) of the Radio Access Network (RAN), identification or address information of the Access and Mobility Management Function (AMF), identification or address information of the Session Management Function (SMF), identification or address information of the UPF, endpoint information of the UPF for the first data transmission bearer, and/or service-related information for the data transmission bearer.

In some embodiments of the present invention, the fourth connection establishment request message (e.g., RAN-UPF UP connection and UPF-CNSMF UP connection establishment request message) includes at least one of the following: identification or address information of the network node (e.g., gNB) of the Radio Access Network (RAN), identification or address information of the Core Network Service Management Function (CNSMF), identification or address information of the Access and Mobility Management Function (AMF), identification or address information of the Session Management Function (SMF), identification or address information of the UPF, identification or address information related to the Data Network (DN), endpoint information of the base station for the first data transmission bearer, endpoint information of the CNSMF for the second data transmission bearer, endpoint information of the DN for the third data transmission bearer, and/or service-related information for the data transmission bearer.

In some embodiments of the present invention, the first connection establishment request message (e.g., RAN-UPF UP connection and UPF-CNSMF UP connection establishment request message) includes at least one of the following: identification or address information of the network node (e.g., gNB) of the Radio Access Network (RAN), identification or address information of the Access and Mobility Management Function (AMF), identification or address information of the Session Management Function (SMF), identification or address information of the User Plane Function (UPF), endpoint information of the UPF for the first data transmission bearer, and/or service-related information for the data transmission bearer.

In some embodiments of the present invention, the fifth connection establishment request message (e.g., RAN-UPF UP connection and UPF-CNSMF UP connection establishment request message) includes at least one of the following: identification or address information of the network node (e.g., gNB) of the Radio Access Network (RAN), identification or address information of the Access and Mobility Management Function (AMF), identification or address information of the UPF, identification or address information of the Session Management Function (SMF), identification or address information of the Core Network Service Management Function (CNSMF), endpoint information of the UPF for the second data transmission bearer, and/or service-related information for the data transmission bearer.

In some embodiments of the present invention, the service-related information for the data transmission bearer includes at least one of the following: a service type or a function type, a service data rate, and information related to Quality of Service (QoS) for the service.

In some embodiments of the present invention, the second connection establishment response message includes at least one of the following: identification or address information of the network node (e.g., gNB) of the Radio Access Network (RAN), identification or address information of the Access and Mobility Management Function (AMF), identification or address information of the Session Management Function (SMF), identification or address information of the UPF, endpoint information of the UPF for the first data transmission bearer, and/or service-related information for the data transmission bearer.

In some embodiments of the present invention, the third connection establishment response message includes at least: endpoint information of the base station for the first data transmission bearer.

In some embodiments of the present invention, the fourth connection establishment response message includes at least: endpoint information of the UPF for the first data transmission bearer, endpoint information of the UPF for the second data transmission bearer, and/or endpoint information of the UPF for the third data transmission bearer.

In some embodiments of the present invention, the first connection establishment response message includes at least: endpoint information of the base station for the first data transmission bearer.

In some embodiments of the present invention, the fifth connection establishment response message includes at least: endpoint information of the CNSMF for the second data transmission bearer.

In some embodiments of the present invention, the fourth connection establishment complete message includes at least: endpoint information of the base station for the first data transmission bearer, endpoint information of the CNSMF for the second data transmission bearer, and/or endpoint information of the DN for the third data transmission bearer.

In some embodiments of the present invention, in a downlink direction, first, data related to at least two UEs is mapped by the RAN to a Data Radio Bearer (DRB) of a Uu interface of the at least two UEs, and then data related to the at least two UEs is transmitted via the Data Radio Bearer (DRB); wherein the data related to the at least two UEs is transmitted via the first data transmission bearer.

In some embodiments of the present invention, in an uplink direction, the first network node selects one UE from the at least two UEs, maps the Data Radio Bearer and data of a Uu interface of the selected UE to the first data transmission bearer, and then transmits the data of the selected UE via the first data transmission bearer.

In some embodiments of the present invention, in the uplink direction, the data transmission method further comprises:
the first network node selecting one UE from the at least two UEs, and mapping at least one Data Radio Bearer (DRB) of the selected UE to at least one Quality of Service (QoS) flow related to the first data transmission bearer; and
sending a Service Data Unit (SDU) carried by the at least one DRB to the corresponding Quality of Service (QoS) flow.

In some embodiments of the present invention, the first network node measures an uplink transmission quality of the at least two UEs to obtain measurement results.

In some embodiments of the present invention, for the selected UE, when the measurement results are lower than a predetermined value, the first network node triggers a UE reselection process, wherein the UE reselection process is to reselect a UE corresponding to the best measurement result, and map data carried by at least two DRBs of the reselected UE to a QoS flow corresponding to the DRBs.

Exemplary embodiments of the method are described as follows.

### Embodiment 1: AI-related Data Interaction Between RAN and CN Based on Control Plane Messages

As shown in FIG. 13, the Radio Access Network (RAN) 20 has an AI function. The Core Network (CN) includes an AI function network node. In this embodiment, the AI function network node of the CN may be a Network Data Analytics Function (NWDAF) network node, or an AI function network node for a specific service, such as a Location Management Function (LMF) that supports AI functions. This embodiment is described using the NWDAF as an example, but the principles of the method and process therein are also applicable to other AI function network nodes.

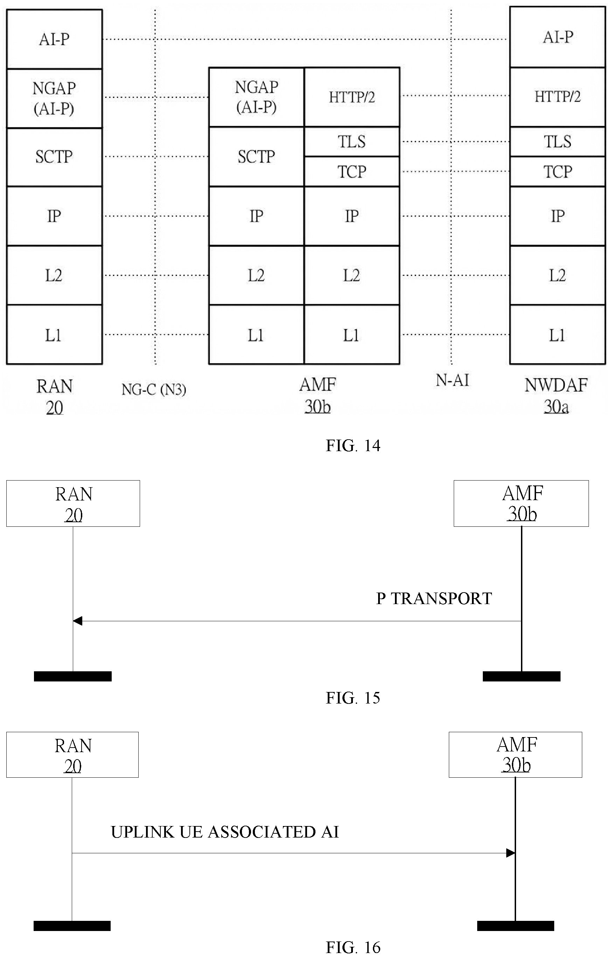

The RAN 20 performs data interaction with the NWDAF via the Access and Mobility Management Function (AMF) 30b network node, and the data flow is shown by the dashed line 201 in FIG. 13. An embodiment of the present invention mainly involves defining a dedicated procedure on the N2 interface between the RAN 20 and the AMF 30b, i.e., the NG-C interface, to satisfy data interaction requirements. For the N-AI interface protocol and its data interaction process between the AMF 30b and the NWDAF, the existing NL1 interface protocol and data interaction process of the 5GC can be referenced for enhancement and adaptive modification (as shown by the N-AI interface in FIG. 14).

Furthermore, as shown in FIG. 13, the RAN 20 performs AI-related data interaction with the NWDAF 30a based on the AI Protocol (AI-P). The AI-P may be an existing data transmission protocol or an enhanced and modified version of an existing protocol, such as the NG-RAN; NR Positioning Protocol A (NRPPa) defined in 3GPP TS 38.455, or a newly defined data transmission protocol. An embodiment of the present invention mainly involves supporting the transmission of AI-related data between the RAN 20 and the NWDAF 30a by enhancing the NGAP protocol on the NG-C interface, that is, by adding functions for transmitting AI-P PDUs.

An embodiment of the present invention defines a dedicated procedure for transmitting AI-related data on the NG interface of 5G or on the interface between nodes of the RAN and the CN in a future mobile communication system.

As an embodiment, a transmission process for AI-related data, i.e., AI-P PDUs, is added to the NGAP protocol of the 5G NG-C interface. The process includes: an uplink and/or downlink transmission process for UE-associated AI data using UE-associated signaling; and an uplink and/or downlink transmission process for non-UE-associated AI data using non-UE-associated signaling. Specific examples are described below.

Referring to FIG. 15, a DOWNLINK UE ASSOCIATED AI-P TRANSPORT method is shown. In this embodiment, the AMF 30b initiates a downlink UE-associated AI-P data transmission by sending a DOWNLINK UE ASSOCIATED AI-P TRANSPORT message to the RAN 20.

Referring to FIG. 16, an UPLINK UE ASSOCIATED AI-P TRANSPORT method is shown. In this embodiment, the RAN 20 initiates an uplink UE-associated AI-P data transmission by sending an UPLINK UE ASSOCIATED AI-P TRANSPORT message to the AMF 30b.

Based on the existing NGAP protocol framework, the functional definitions and contents of the DOWNLINK UE ASSOCIATED AI-P TRANSPORT and UPLINK UE ASSOCIATED AI-P TRANSPORT messages are as follows:

| IE/Group Name | Presence | Range | IE type and reference | Semantics description | Criticality | Assigned Criticality |
|---|---|---|---|---|---|---|
| Message Type | M | | 9.3.1.1 | | YES | ignore |
| AMF UE NGAP ID | M | | 9.3.3.1 | | YES | reject |
| RAN UE NGAP ID | M | | 9.3.3.2 | | YES | reject |
| Routing ID | M | | 9.3.3.13 | | YES | reject |
| AI-P PDU | M | | | | YES | reject |

The information elements are described as follows:
1.Message Type: A specific message type value is to be defined for DOWNLINK UE ASSOCIATED AI-P TRANSPORT and UPLINK UE ASSOCIATED AI-P TRANSPORT.
2.AMF UE NGAP ID: An identifier that uniquely identifies the UE association on the NG interface. See 3GPP TS 38.401 for reference.
3.RAN UE NGAP ID: An identifier that uniquely identifies the UE association within the RAN.
4.Routing ID: Used to identify an AI function network node in the CN (5GC), such as a specific NWDAF node.
5.AI-P PDU: This information element contains an AI-related Protocol Data Unit (PDU) to be transmitted between the RAN and the NWDAF, i.e., an AI-P PDU. The AMF directly forwards this PDU between the RAN 20 and the NWDAF 30a.

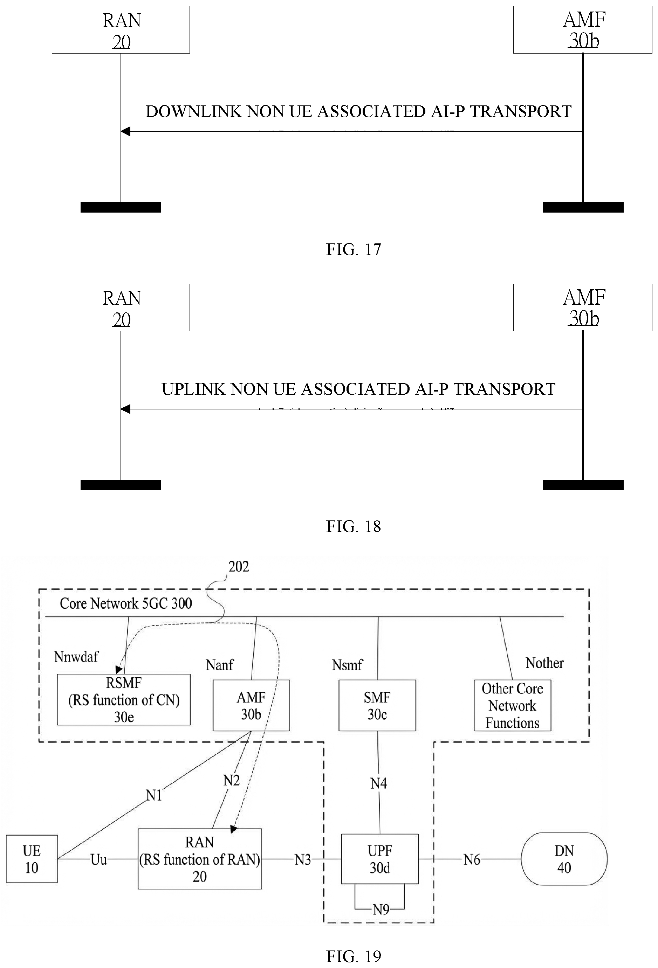

Referring to FIG. 17, a DOWNLINK NON UE ASSOCIATED AI-P TRANSPORT method is shown. In this embodiment, the AMF 30b initiates a downlink non-UE-associated AI-P transmission by sending a DOWNLINK NON UE ASSOCIATED AI-P TRANSPORT message to the RAN 20.

### UPLINK NON UE ASSOCIATED AI-P TRANSPORT

Referring to FIG. 18, an UPLINK NON UE ASSOCIATED AI-P TRANSPORT method is shown. In this embodiment, the RAN 20 initiates an uplink non-UE-associated AI-P transmission by sending an UPLINK NON UE ASSOCIATED AI-P TRANSPORT message to the AMF 30b.

Based on the existing NGAP protocol framework, the functional definitions and contents of the DOWNLINK NON UE ASSOCIATED AI-P TRANSPORT and UPLINK NON UE ASSOCIATED AI-P TRANSPORT messages are as follows:

| IE/Group Name | Presence | Range | IE type and reference | Semantics description | Criticality | Assigned Criticality |
|---|---|---|---|---|---|---|
| Message Type | M | | 9.3.1.1 | | YES | ignore |
| Routing ID | M | | 9.3.3.13 | | YES | reject |
| AI-P PDU | M | | | | YES | reject |

The descriptions of the information elements are as follows:
1.Message Type (i.e., message type element): A specific message type value is to be defined for DOWNLINK NON UE ASSOCIATED AI-P TRANSPORT and UPLINK NON UE ASSOCIATED AI-P TRANSPORT.
2.Routing ID: This is used to identify an Artificial Intelligence (AI) function network node in the 5G Core (5GC), such as a specific Network Data Analytics Function (NWDAF) node.
3.AI-P PDU: This information element includes an AI-related Protocol Data Unit (PDU) from a Radio Access Network (RAN) to an NWDAF or from an NWDAF to a RAN, i.e., an AI-P PDU. An Access and Mobility Management Function (AMF) 30b directly forwards this message between the RAN 20 and the NWDAF 30a.

In another implementation, data interaction related to an AI service or function is performed between two RAN nodes based on control plane messages. These RAN nodes have an AI service or function, or another node with an AI service or function is associated with the RAN node to support the RAN node in performing the AI service or function. For example, the other node with an AI service or function serves as a sub-node for the AI service or function of the RAN node.

Taking a 5G RAN (i.e., a RAN node of a 5G mobile communication system, such as a gNodeB (gNB)) as an example, to support data interaction related to an AI service or function between RAN nodes based on control plane messages, a transmission process and messages for AI data are added to the Xn Application Protocol (XnAP) of the Xn^{-C} interface. The AI data can be a PDU of the AI-P protocol or a payload of the AI data. Specifically, the control plane message includes at least one of the following information:
Message Type (i.e., message type element): This includes at least a User Equipment (UE) associated AI transport message (UE ASSOCIATED AI-P TRANSPORT) and a non-UE associated AI transport message (NON UE ASSOCIATED AI-P TRANSPORT).
UE identifier on the Xn interface: an identifier that uniquely identifies a UE on the Xn interface between the two RAN nodes, for which reference can be made to 3GPP protocol TS 38.401.
Routing ID: an identifier used by the RAN to identify and route the AI data to a node that provides the AI service or function, if the AI service or function resides in that other node.
AI data: This data can be an AI-P PDU or a normal payload.

Specifically, if no Xn^{-C} interface is established between the two RAN nodes, the aforementioned message can also be forwarded via the AMF 30b of the core network. That is, a first RAN node (referred to as RAN1) sends the AI data to the AMF 30b using the uplink AI data transmission process on the aforementioned Next Generation Application Protocol (NGAP) interface, and then the AMF 30b sends the AI data to a second RAN node (referred to as RAN2) using the downlink AI data transmission process on the aforementioned NGAP interface.

In another implementation, data interaction related to an AI service or function is performed between internal nodes of a RAN based on control plane messages. These internal RAN nodes have an AI service or function. Taking the gNB-Central Unit (gNB-CU) and gNB-Distributed Unit (gNB-DU) of a 5G RAN (i.e., a RAN node of a 5G mobile communication system, such as a gNB) as an example, to support data interaction related to an AI service or function between the gNB-CU and the gNB-DU based on control plane messages, a transmission process and messages for AI data are added to the F1 Application Protocol (F1AP) of the F1-C interface. The AI data can be a PDU of the AI-P protocol or a payload of the AI data. Specifically, the control plane message includes at least one of the following information:
Message Type (i.e., message type element): This includes at least a UE-associated AI transport message (UE ASSOCIATED AI-P TRANSPORT) and a non-UE-associated AI transport message (NON UE ASSOCIATED AI-P TRANSPORT).
UE identifier on the F1 interface: an identifier that uniquely identifies a UE on the F1 interface between the gNB-CU and the gNB-DU, for which reference can be made to 3GPP protocol TS 38.401.
Routing ID: an identifier used by the gNB-CU and the gNB-DU to identify and route the AI data to a node that provides the AI service or function, if the AI service or function resides in that other node.
AI data: This data can be an AI-P PDU or a normal payload.

### Embodiment 2: Data Interaction Related to Radio Sensing Services Between RAN and CN Based on Control Plane Messages

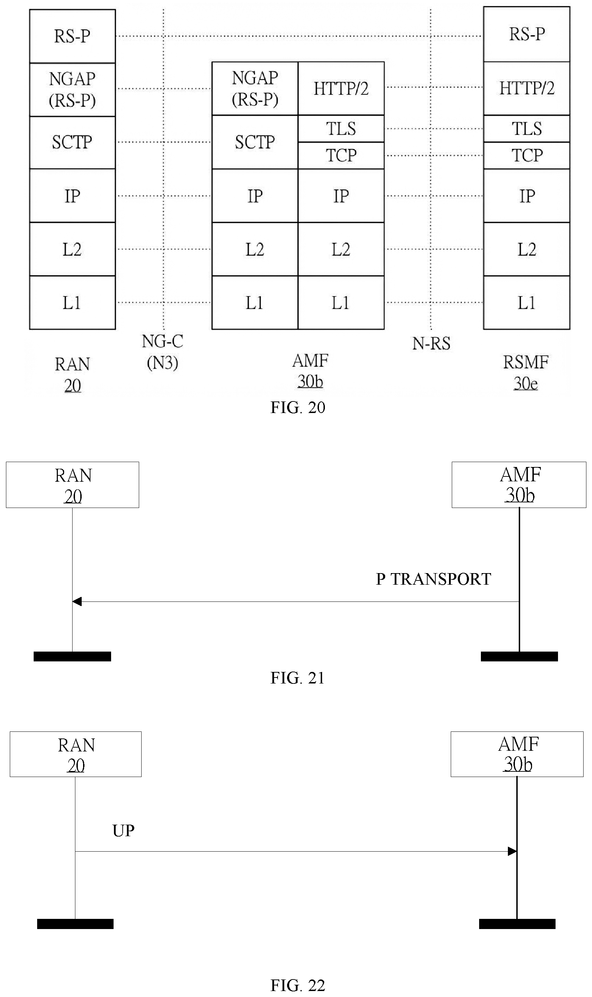

As shown in FIG. 19, a process of data interaction between a Radio Access Network (RAN) 20 and a Radio Sensing Management Function (RSMF) node via an Access and Mobility Management Function (AMF) network node 30b is illustrated. In this embodiment, the RAN 20 also has a Radio Sensing (RS) function. The Core Network (CN) also includes an RS functional network node of the CN, such as a Radio Sensing Management Function (RSMF) network node 30e. Data interaction is performed between the RAN 20 and the RSMF 30e via the AMF network node 30b, and the data flow is shown by the dashed line 202 in FIG. 19. Embodiments of the present invention mainly relate to defining a dedicated procedure on the N2 interface between the RAN 20 and the AMF 30b, i.e., the NG-C interface, to support said data interaction. As for the N-RS interface protocol and its data interaction process between the AMF 30b and the RSMF, the existing 5G Core (5GC) NL1 interface protocol and data interaction process can be referenced for enhancement and adaptive modification (as shown by the N-RS interface in FIG. 20).

Further, as shown in FIG. 20, the RAN 20 performs RS-related data interaction with the RSMF 30e based on the Radio Sensing Protocol (RS-P). The RS-P protocol can be an existing data transmission protocol, or an enhanced and modified version based on an existing protocol, such as the NG-RAN; NR Positioning Protocol A (NRPPa) defined in 3GPP TS 38.455, or a newly defined data transmission protocol, such as a new protocol enhanced and modified with reference to the NRPPa protocol. Embodiments of the present invention mainly relate to supporting the transmission of RS-related data between the RAN 20 and the RSMF by enhancing the NGAP protocol on the NG-C interface, i.e., by adding a function for transmitting RS-P protocol data units.

Embodiments of the present invention define a dedicated procedure for transmitting RS-related data on the NG interface of the 5G CN or on an interface between nodes of the RAN and the CN of a future mobile communication system.

Embodiments of the present invention add a transmission procedure for RS-related data, i.e., RS-P protocol data units, to the NGAP protocol of the NG-C interface of the 5G CN. This includes: an uplink and/or downlink transmission procedure for UE-associated RS data, using UE-associated signaling; and an uplink and/or downlink transmission procedure for non-UE-associated RS data, using non-UE-associated signaling. Specific examples are described as follows.

Referring to FIG. 21, a DOWNLINK UE ASSOCIATED RS-P TRANSPORT method is shown. In this embodiment, the AMF 30b initiates a downlink UE-associated RS-P transmission by sending a DOWNLINK UE ASSOCIATED RS-P TRANSPORT message to the RAN 20.

Referring to FIG. 22, an UPLINK UE ASSOCIATED RS-P TRANSPORT method is shown. In this embodiment, the RAN 20 initiates an uplink UE-associated RS-P transmission by sending an UPLINK UE ASSOCIATED RS-P TRANSPORT message to the AMF 30b.

Based on the existing NGAP protocol framework, the functional definitions and contents of the DOWNLINK UE ASSOCIATED RS-P TRANSPORT and UPLINK UE ASSOCIATED RS-P TRANSPORT messages are as follows:

| IE/Group Name | Presence | Range | IE type and reference | Semantics description | Criticality | Assigned Criticality |
|---|---|---|---|---|---|---|
| Message Type | M | | 9.3.1.1 | | YES | ignore |
| AMF UE NGAP ID | M | | 9.3.3.1 | | YES | reject |
| RAN UE NGAP ID | M | | 9.3.3.2 | | YES | reject |
| Routing ID | M | | 9.3.3.13 | | YES | reject |
| RS-P PDU | M | | | | YES | reject |

The descriptions of the information elements are as follows:
1.Message Type: A specific message type value needs to be defined for DOWNLINK UE ASSOCIATED RS-P TRANSPORT and UPLINK UE ASSOCIATED RS-P TRANSPORT;
2.AMF UE NGAP ID: An identifier that uniquely identifies a UE association on the NG interface; reference can be made to 3GPP protocol TS 38.401;
3.AN UE NGAP ID: An identifier that uniquely identifies a UE association within the RAN;
4.Routing ID: Used to identify an RS functional network node in the CN (5GC), such as a specific RSMF node;
5.RS-P PDU: This information element includes an RS-related Protocol Data Unit (PDU), i.e., an RS-P PDU, from the RAN to the RSMF or from the RSMF to the RAN. The AMF will directly forward this message between the RAN and the RSMF.

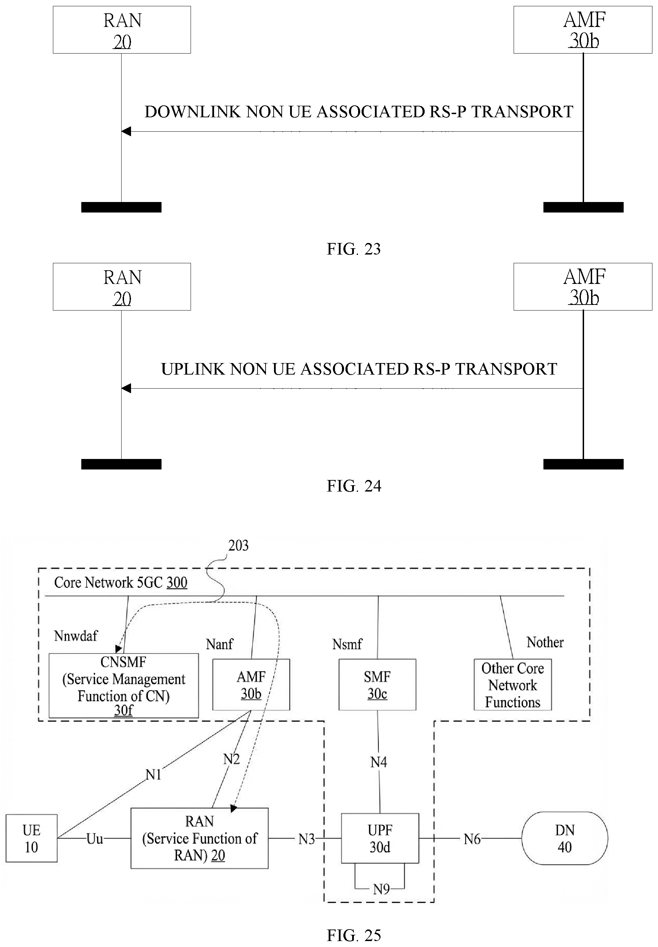

Referring to FIG. 23, a DOWNLINK NON UE ASSOCIATED RS-P TRANSPORT method is shown. In this embodiment, the AMF 30b initiates a downlink non-UE-associated RS-P transmission by sending a DOWNLINK NON UE ASSOCIATED RS-P TRANSPORT message to the RAN 20.

Referring to FIG. 24, an UPLINK NON UE ASSOCIATED RS-P TRANSPORT method is shown. In this embodiment, the RAN 20 initiates an uplink non-UE-associated RS-P transmission by sending an UPLINK NON UE ASSOCIATED RS-P TRANSPORT message to the AMF 30b.

Based on the existing NGAP protocol framework, the functional definitions and contents of the DOWNLINK NON UE ASSOCIATED RS-P TRANSPORT and UPLINK NON UE ASSOCIATED RS-P TRANSPORT messages are as follows:

| IE/Group Name | Presence | Range | IE type and reference | Semantics description | Criticality | Assigned Criticality |
|---|---|---|---|---|---|---|
| Message Type | M | | 9.3.1.1 | | YES | ignore |
| Routing ID | M | | 9.3.3.13 | | YES | reject |
| RS-P PDU | M | | | | YES | reject |

The descriptions of the information elements are as follows:
1.Message Type (i.e., a message type element): A specific message type value needs to be defined for DOWNLINK NON UE ASSOCIATED RS-P TRANSPORT and UPLINK NON UE ASSOCIATED RS-P TRANSPORT.
2.Routing ID: It is used to identify an RS functional network node in the Core Network (CN) (5GC), such as a specific RSMF node.
3.RS-P PDU: This information element includes an RS-related Protocol Data Unit (PDU) from the RAN 20 to an RSMF or from the RSMF to the RAN 20, i.e., an RS-P PDU. An AMF 30b will directly forward this message between the RAN 20 and the RSMF.

In another implementation, data related to a Radio Sensing (RS) service or function is exchanged between two RAN nodes based on control plane messages. These RAN nodes have the RS service or function, or another node that has the RS service or function is associated with the RAN node to support the RAN node in performing the RS service or function. For example, a sub-node for the RS service or function of the RAN node is associated with, connected to, or interacts with the RAN node.

Taking a 5G RAN (i.e., a RAN node of a 5G mobile communication system, such as a gNB) as an example, to support data exchange related to a radio sensing service or function between RAN nodes based on control plane messages, a transmission procedure for radio sensing data (RS data) is added to the XnAP protocol of the Xn^{-C} interface, where the RS data can be a Protocol Data Unit (PDU) of the RS-P protocol or a payload of the RS data. Specifically, the control plane message includes at least one of the following pieces of information:
- Message Type (i.e., a message type element): includes at least a UE-associated RS transport message (UE ASSOCIATED RS-P TRANSPORT) and a non-UE-associated RS transport message (NON UE ASSOCIATED RS-P TRANSPORT).
- Xn interface UE identifier: an identifier that uniquely identifies a UE on the Xn interface between two RAN nodes; reference can be made to 3GPP protocol TS 38.401.
- Routing ID: if the RS service or function is in another node, an identifier used by the RAN to identify and route the RS data to the node providing the RS service or function.
- RS data: The data can be an RS-P PDU or a normal payload.

Specifically, if an Xn^{-C} interface is not established between two RAN nodes, the foregoing message can also be forwarded via an AMF node of the core network. That is, a first RAN node sends the RS data to the AMF node through the foregoing RS data uplink transmission procedure on the NGAP interface, and then the AMF sends the RS data to a second RAN node through the foregoing RS data downlink transmission procedure on the NGAP interface.

In another implementation, data related to a radio sensing (RS) service or function is exchanged between internal nodes of a RAN based on control plane messages. These internal RAN nodes have an RS service or function. Taking the gNB-CU and gNB-DU of a 5G RAN (i.e., a RAN node of a 5G mobile communication system, such as a gNB) as an example, to support data exchange related to an RS service or function between the gNB-CU and the gNB-DU based on control plane messages, a transmission procedure and a message for RS data are added to the F1AP protocol of the F1-C interface, where the RS data can be a Protocol Data Unit (PDU) of the RS-P protocol or a payload of the RS data. Specifically, the control plane message includes at least one of the following pieces of information:
- Message Type (i.e., a message type element): includes at least a UE-associated RS transport message (UE ASSOCIATED RS-P TRANSPORT) and a non-UE-associated RS transport message (NON UE ASSOCIATED RS-P TRANSPORT).
- F1 interface UE identifier: an identifier that uniquely identifies a UE on the F1 interface between the gNB-CU and the gNB-DU; reference can be made to 3GPP protocol TS 38.401.
- Routing ID: if the RS service or function is in another node, an identifier used by the gNB-CU and the gNB-DU to identify and route the RS data to the node providing the RS service or function.
- RS data: The data can be an RS-P PDU or a normal payload.

### Embodiment 3: Service Data Interaction Between RAN and CN Based on Control Plane Messages to Support Service Extensibility

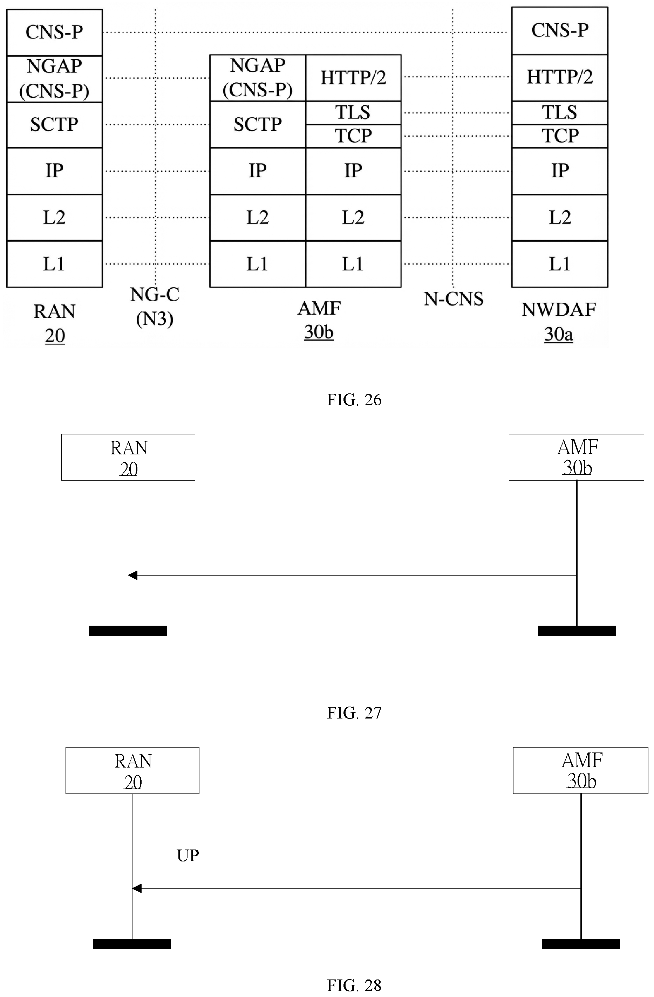

As shown in FIG. 25, the Radio Access Network (RAN) 20 also has one or more services or functions, and the Core Network (CN) also includes one or more service or function network nodes of the CN, such as a Core Network Service Management Function (CNSMF) network node. The RAN 20 interacts with the CNSMF 30g via the Access and Mobility Management Function (AMF) 30b network node, and the data flow is shown by the dashed line 203 in FIG. 25. This embodiment mainly relates to defining a dedicated procedure on the N2 interface between the RAN 20 and the AMF 30b, i.e., the NG-C interface, to support said data interaction. As for the N-CNS interface protocol and the data interaction process thereof between the AMF 30b and the CNSMF, enhancements and adaptive modifications can be made by referring to the existing NL1 interface protocol and data interaction process of the 5G Core (5GC) (as shown by the N-CNS interface in FIG. 26).

Further, as shown in FIG. 26, the RAN 20 performs service-related data interaction with the CNSMF 30g through a CN Service Protocol (CNS-P). The CNS-P may be an existing data transmission protocol, or an enhanced and modified version based on an existing protocol, for example, NG-RAN; NR Positioning Protocol A (NRPPa), i.e., 3GPP TS 38.455, or a newly defined data transmission protocol, for example, a new protocol that is enhanced and modified with reference to the NRPPa protocol. Embodiments of the present invention mainly relate to supporting the transmission of service-related data between the RAN 20 and the CNSMF 30g by enhancing the NGAP protocol on the NG-C interface, i.e., by adding a function for transmitting CNS-P protocol data packets.

Specifically, the above-described service or function, the service or function network node CNSMF, the N-CNS interface between the AMF 30b and the CNSMF, and the CNS-P protocol carrying service data between the RAN 20 and the CNSMF 30g all refer to a high-level, logical, and virtual concept. When corresponding to one or more specific services or functions, their corresponding specific concepts and definitions may be the same or different. For example, a service herein may be a positioning service, an Artificial Intelligence (AI) function, a radio sensing service, or other future services. The corresponding core network function network node may be a Location Management Function (LMF), a Network Data Analytics Function (NWDAF), or the above-described RSMF, or another function network node. The corresponding N-CNS interface may be N-L1, or the above-described N-AI or N-RS interface, or another interface. The corresponding CNS-P protocol may be NRPPa, or the above-described AI-P or RS-P protocol, or another protocol. The network nodes of the CN corresponding to multiple services or functions may be independent and separate from each other, or the network nodes of any two or more of the services or functions may be combined.

Embodiments of the present invention define a common procedure for transmitting service-related data on the NG interface of 5G or on the interface between nodes of a RAN and a CN of a future mobile communication system.

Embodiments of the present invention add a transmission procedure for general/multi-purpose service-related data, i.e., CNS-P protocol data packets, to the NGAP protocol of the NG-C interface of 5G, including: an uplink and/or downlink transmission procedure for UE-associated general/multi-purpose service data, using UE-associated signaling; and an uplink and/or downlink transmission procedure for non-UE-associated general/multi-purpose service data, using non-UE-associated signaling. Specific examples are described as follows.

Referring to FIG. 27, FIG. 27 shows a DOWNLINK UE ASSOCIATED COMMON SERVICE DATA TRANSPORT method. In this embodiment, the AMF 30b initiates the procedure by sending a DOWNLINK UE ASSOCIATED COMMON SERVICE DATA TRANSPORT message to the RAN 20.

Referring to FIG. 28, FIG. 28 shows an UPLINK UE ASSOCIATED COMMON SERVICE DATA TRANSPORT method. In this embodiment, the RAN 20 initiates the uplink UE-associated common service data transmission by sending an UPLINK UE ASSOCIATED COMMON SERVICE DATA TRANSPORT message to the AMF 30b.

Based on the existing NGAP protocol framework, the functional definitions and contents of the DOWNLINK UE ASSOCIATED COMMON SERVICE DATA TRANSPORT and UPLINK UE ASSOCIATED COMMON SERVICE DATA TRANSPORT messages are as follows:

| IE/Group Name | Presence | Range | IE type and reference | Semantics description | Criticality | Assigned Criticality |
|---|---|---|---|---|---|---|
| Message Type | M | | 9.3.1.1 | | YES | ignore |
| Service Type | M | | X.X.X.X | | YES | ignore |
| AMF UE NGAP ID | M | | 9.3.3.1 | | YES | reject |
| RAN UE NGAP ID | M | | 9.3.3.2 | | YES | reject |
| Routing ID | M | | 9.3.3.13 | | YES | reject |
| CNS-P PDU | M | | | | YES | reject |

The descriptions of the information elements are as follows:
1.Message Type: A specific message type value needs to be defined for DOWNLINK UE ASSOCIATED COMMON SERVICE DATA TRANSPORT and UPLINK UE ASSOCIATED COMMON SERVICE DATA TRANSPORT.
2.Service Type: This element is used to identify the transmitted service type or function type. Different service type identifiers or type values can be defined for different service types or function types.
6.AMF UE NGAP ID: An identifier that uniquely identifies a UE association on the NG interface; reference can be made to 3GPP protocol TS 38.401.
7.RAN UE NGAP ID: An identifier that uniquely identifies a UE association within the RAN.
8.Routing ID: This element is used to identify a service or function network node in the CN (5GC), such as a CNSMF node for a specific service.
9.CNS-P-PDU: This information element includes a protocol data unit (PDU) related to service data from the RAN to the CNSMF or from the CNSMF to the RAN, i.e., a CNS-P PDU. The AMF directly forwards this PDU between the RAN and the CNSMF without interpretation. Specifically, this information element needs to match the Service Type, i.e., if different service types use different CNS-P protocols, the CNS-P PDU needs to correspond to the Service Type.

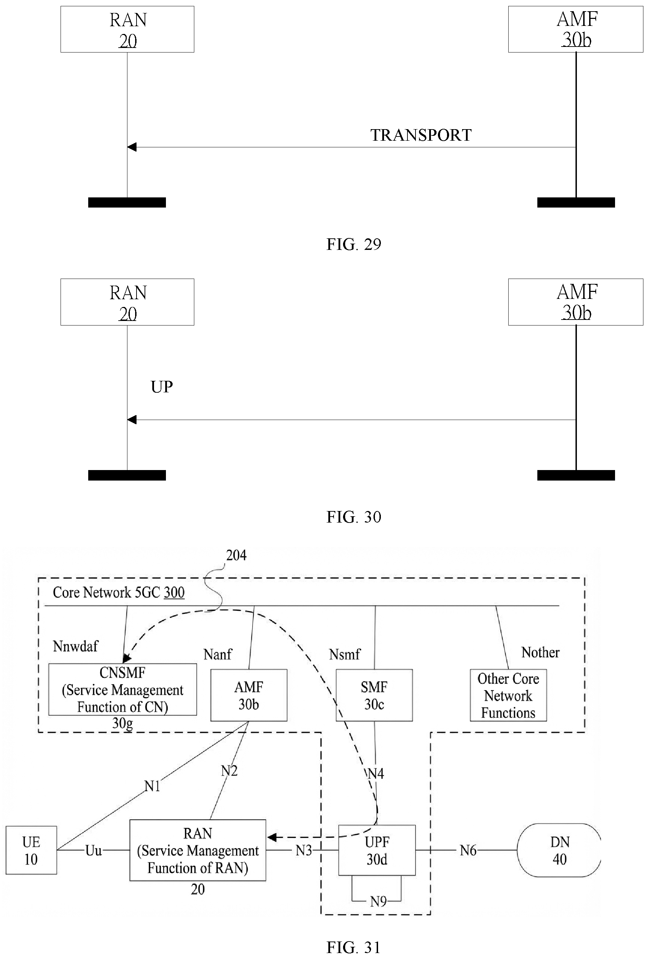

Referring to FIG. 29, FIG. 29 shows a DOWNLINK NON UE ASSOCIATED COMMON SERVICE DATA TRANSPORT method. In this embodiment, the AMF 30b initiates the downlink non-UE-associated common service data transmission by sending a DOWNLINK NON UE ASSOCIATED COMMON SERVICE DATA TRANSPORT message to the RAN 20.

Referring to FIG. 30, FIG. 30 shows an UPLINK NON UE ASSOCIATED COMMON SERVICE DATA TRANSPORT method. In this embodiment, the RAN 20 initiates the uplink non-UE-associated common service data transmission by sending an UPLINK NON UE ASSOCIATED COMMON SERVICE DATA TRANSPORT message to the AMF 30b.

Based on the existing Next Generation Application Protocol (NGAP) framework, the functional definitions and contents of the DOWNLINK NON UE ASSOCIATED COMMON SERVICE DATA TRANSPORT and UPLINK NON UE ASSOCIATED COMMON SERVICE DATA TRANSPORT messages are as follows:

| IE/Group Name | Presence | Range | IE type and reference | Semantics description | Criticality | Assigned Criticality |
|---|---|---|---|---|---|---|
| Message Type | M | | 9.3.1.1 | | YES | ignore |
| Service Type | M | | X.X.X.X | | YES | ignore |
| Routing ID | M | | 9.3.3.13 | | YES | reject |
| CNS-P PDU | M | | | | YES | reject |

The descriptions of the information elements are as follows:
1.Message Type (i.e., message type element): A specific message type value needs to be defined for DOWNLINK NON UE ASSOCIATED COMMON SERVICE DATA TRANSPORT and UPLINK NON UE ASSOCIATED COMMON SERVICE DATA TRANSPORT.
2.Service Type (i.e., service type element): This element is used to identify the transmitted service type or function type. Different service type identifiers or type values can be defined for different service types or function types.
3.Routing ID: This element is used to identify a network node of a service or function in the Core Network (CN) (5GC), such as a Core Network Service Management Function (CNSMF) node for a specific service.
4.CNS-P-PDU: This information element includes a protocol data unit (PDU) related to service data from the RAN 20 to the CNSMF or from the CNSMF to the RAN 20, i.e., a CNS-P PDU. The Access and Mobility Management Function (AMF) 30b will directly forward this message between the RAN 20 and the CNSMF 30g without interpretation. Specifically, this information element needs to match the Service Type, i.e., if different service types use different CNS-P protocols, the CNS-P PDU needs to correspond to the Service Type.

In another implementation, data interaction related to one or more services or functions is performed between two Radio Access Network (RAN) nodes based on control plane messages. These RAN nodes have one or more services or functions, or a node of another one or more services or functions is associated with the RAN node to support the RAN node in completing the one or more services or functions. For example, a sub-node of one or more services or functions of the RAN node is associated with, connected to, or interacts with the RAN node.

Taking a 5G RAN (i.e., a RAN node of a 5G mobile communication system, such as a gNB) as an example, to support data interaction related to one or more services or functions between RAN nodes based on control plane messages, a transmission procedure and messages for data of one or more services or functions (Service data) are added to the Xn Application Protocol (XnAP) of the Xn^{-C} interface, wherein the Service data can be a PDU of a Service-P protocol, or a payload of the Service data. The Service-P protocol is similar to the CNS-P protocol described above. Specifically, the control plane message includes at least one of the following information:
1.Message Type (i.e., message type element): includes at least a UE ASSOCIATED COMMON SERVICE DATA TRANSPORT message and a NON UE ASSOCIATED COMMON SERVICE DATA TRANSPORT message;
2.Service Type (i.e., service type element): used to identify the transmitted service type or function type, where different service type identifiers or type values can be defined for different service types or function types;
3.UE identity on the Xn interface: an identity that uniquely identifies a User Equipment (UE) on the Xn interface between two RAN nodes; reference can be made to 3GPP protocol TS 38.401;
4.Routing ID: an identity used by the RAN to identify and route the Service data to the node of the service or function, if the service or function is in another node;
5.Service data: this data can be a Service-P PDU or a normal payload.

Specifically, if no Xn^{-C} interface is established between the two RAN nodes, the above-mentioned message can also be forwarded through an AMF node of the core network. That is, a first RAN node sends the Service data to the AMF node through the above-mentioned uplink common service data transmission procedure on the NGAP interface, and then the AMF sends the Service data to a second RAN node through the above-mentioned downlink common service data transmission procedure on the NGAP interface.

In another implementation, data interaction related to one or more services or functions is performed between internal nodes of a RAN based on control plane messages. These internal RAN nodes have one or more services or functions. Taking the gNB-CU and gNB-DU of a 5G RAN (i.e., a RAN node of a 5G mobile communication system, such as a gNB) as an example, to support data interaction related to one or more services or functions between the gNB-CU and the gNB⁻ DU based on control plane messages, a transmission procedure and messages for data of one or more services or functions (Service data) are added to the F1 Application Protocol (F1AP) of the F1-C interface, wherein the Service data can be a PDU of a Service-P protocol, or a payload of the Service data. Specifically, the control plane message includes at least one of the following information:
Message Type (i.e., message type element): includes at least UPLINK/DOWNLINK UE ASSOCIATED COMMON SERVICE DATA TRANSPORT messages and UPLINK/DOWNLINK NON UE ASSOCIATED COMMON SERVICE DATA TRANSPORT messages;
UE identity on the F1 interface: an identity that uniquely identifies a UE on the F1 interface between the gNB-CU and the gNB-DU; reference can be made to 3GPP protocol TS 38.401;
Routing ID: an identity used by the RAN to identify and route the Service data to the node of the service or function, if the service or function is in another node;
Service data: this data can be a Service-P PDU or a normal payload.

The following describes data interaction between the RAN and the CN based on a user plane connection.

### Embodiment 4: User Plane Connection Between Network Nodes for a Service or Function of a RAN and a CN

Generally, a certain service or function involves network nodes of a Radio Access Network (RAN) and a Core Network (CN), and data interaction with a relatively large data volume and/or real-time requirements exists between these network nodes of the RAN and the CN. In view of this, it is necessary to establish a user plane connection, i.e., a connection-oriented communication link, between the RAN 20 and a User Plane Function (UPF) network node 30d of the CN, and between the UPF 30d and a service or function network node of the CN to meet data interaction requirements. In this embodiment, the service or function network node in the CN is a Core Network Service Management Function (CNSMF). Correspondingly, in the RAN 20, the service or function may be a part of a network node of the RAN 20, or may be another network node. In this embodiment, the service or function is a part of a network node of the RAN 20, i.e., RAN 20 (service or function). In particular, these services or functions are non-UE associated, meaning that the establishment of these services and functions is not associated with a specific UE, but is related to a cell, a base station (such as a gNB of NR), or a specific function or service, and these services or functions may involve multiple cells or base stations. Data corresponding to non-UE associated services or functions is referred to as non-UE associated data, even if this data may originate from or be related to a specific UE.

Referring to FIG. 31, the RAN 20 is shown interacting with the CNSMF through a UPF network node. In this embodiment, the RAN 20 supports a specific service or function, and the CN includes a network node CNSMF for the service management function of the CN. This node also supports said service or function. The RAN 20 interacts with the CNSMF through the UPF network node 30d, and the data flow is shown by the dashed line 204 in FIG. 31. This embodiment involves establishing dedicated user plane connections on the N3 interface between the RAN 20 and the UPF 30d and on the N-SP interface between the UPF 30d and the CNSMF, i.e., the NG-U and N-SP interfaces, to support the data interaction, wherein the N-SP interface is a newly defined interface.

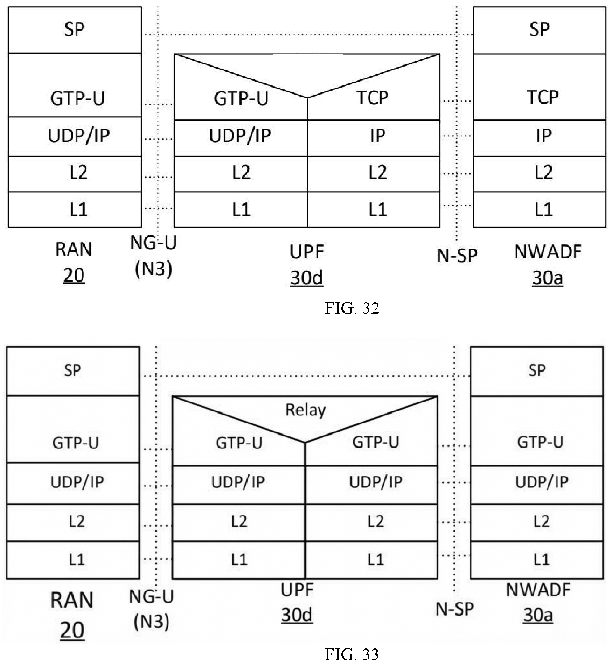

Further, as shown in FIG. 32 and FIG. 33, the RAN 20 performs service-related data interaction with the CNSMF based on a Service Protocol (SP). The SP protocol is related to the corresponding service and function. Depending on the different requirements of different services and functions, the SP protocol can be an existing data transmission protocol or a newly defined data transmission protocol. The embodiments of the present invention involve establishing dedicated user plane connections on the NG-U and N-SP interfaces to support the transmission of service-related data between the RAN 20 and the CNSMF. Therein, the user plane connection of the NG-U interface is a connection based on the GTP-U protocol. SP protocol data packets are transmitted between the RAN 20 and the UPF 30d as Service Data Units (SDUs) of the GTP-U protocol, encapsulated in Protocol Data Units (PDUs) of the GTP-U. For the N-SP interface protocol between the UPF 30d and the CNSMF, this embodiment provides a user plane connection based on the Transmission Control Protocol (TCP) as shown in FIG. 32 and a user plane connection based on GTP-U as shown in FIG. 33.

Specifically, the transmission process of a user plane SP protocol data packet from the RAN 20 to the CNSMF is as follows:
1.The RAN 20 sends the SP protocol data packet to the UPF 30d through the NG-U interface.
2.The UPF 30d receives the SP protocol data packet from the NG-U interface and then forwards it to the CNSMF through the N-SP interface.
3.The CNSMF receives the SP protocol data packet through the N-SP interface.

The transmission process of a user plane SP protocol data packet from the CNSMF to the RAN 20 is the reverse of the above process.

To establish the user plane connections of the NG-U (N3) and N-SP interfaces, it is necessary to design related control plane signaling flows in the control plane interface protocols between the relevant network nodes. This includes enhancements and modifications to the NGAP protocol of the NG-C (N2) interface, involving network nodes such as the RAN, UPF, CNSMF, Access and Mobility Management Function (AMF), and Session Management Function (SMF).

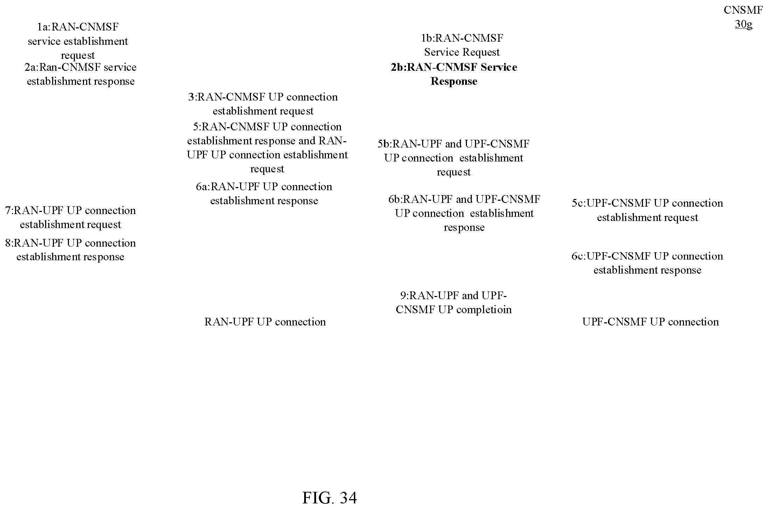

FIG. 34 is a schematic diagram of a related signaling flow, in which the flows and their numbering do not limit the sequence. In addition, the control plane signaling flow may also include only one or more of the flows. The main flows are described as follows:
1a: The RAN 20 (gNB) sends a first service establishment request message (e.g., a RAN-CNSMF service establishment request message) to the AMF 30b to establish a service between the network node of the RAN 20 and the CNSMF. The message includes at least one of the following: identification or address information of the network node of the RAN 20 (e.g., gNB), identification or address information of the AMF, identification or address information of the CNSMF, and RAN-CNSMF service-related information (such as service type or function type, and/or service data rate).

In the example of FIG. 8, the third network node (e.g., AMF 30b) receives a service establishment request message related to the first data transmission bearer, the second data transmission bearer, and/or the third data transmission bearer from the first network node (e.g., gNB) or the fifth network node (e.g., CNSMF) (e.g., step 1a of the corresponding Embodiment 4) (e.g., step 1b of the corresponding Embodiment 4), wherein the service establishment request message includes identification information of the service type or function type, or identification information of the plurality of UEs.
2a: The AMF 30b sends a RAN-CNSMF service establishment response message to the RAN 20 node.
1b: The CNSMF 30g sends a second service establishment request message (e.g., a RAN-CNSMF service establishment request message) to the AMF 30b to establish a service between the network node of the RAN 20 and the CNSMF. The message includes at least one of the following: identification or address information of the network node of the RAN 20 (e.g., gNB), identification or address information of the AMF, identification or address information of the CNSMF, and service-related information for a RAN 20 and CNSMF user plane (RAN-CNSMF UP) connection (such as service type or function type, and/or service data rate).
2b: The AMF 30b sends a RAN-CNSMF service establishment response message to the CNSMF 30g.
3: The AMF 30b sends a connection establishment request message to the SMF 30c to establish a connection between the network node of the RAN 20 and the CNSMF (this message serves as an example of the second connection establishment request message, e.g., a RAN-UPF UP connection and UPF-CNSMF UP connection establishment request message). The RAN-CNSMF UP connection refers to the aforementioned user plane connection of the NG-U and/or N-SP interface. The message includes at least one of the following: identification or address information of the network node of the RAN 20 (e.g., gNB), identification or address information of the AMF, identification or address information of the SMF, identification or address information of the CNSMF network node, and service-related information for the RAN 20 and CNSMF user plane (RAN-CNSMF UP) connection (such as service type or function type, and/or service data rate).
5: The SMF 30c sends to the AMF 30b a RAN-CNSMF UP connection establishment response message (as an example of the second connection establishment response message) and a connection establishment request message to establish a connection between the network node of the RAN 20 and the UPF node (as an example of the third connection establishment request message, e.g., a RAN-UPF UP connection establishment request message).

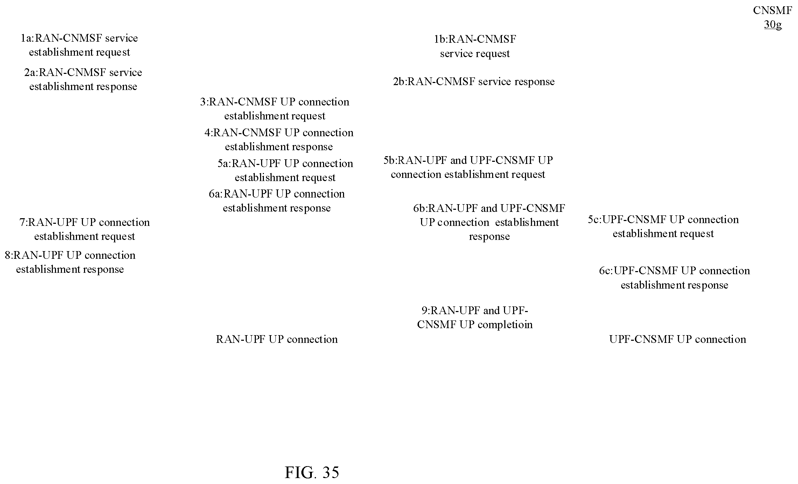

Referring to FIG. 35, in another embodiment, step 5 can be divided into two steps, comprising steps 4 and 5a.
4: The SMF 30c sends a RAN-CNSMF UP connection establishment response message (as an example of the second connection establishment response message) to the AMF 30b.
5a: The SMF 30c sends to the AMF 30b a connection establishment request message to establish a connection between the network node of the RAN 20 and the UPF node (as an example of the third connection establishment request message, e.g., a RAN-UPF UP connection establishment request message). The message includes at least one of the following: identification or address information of the network node of the RAN 20 (e.g., gNB), identification or address information related to the AMF, identification or address information of the SMF, identification or address information of the UPF, and resource-related information of the RAN and UPF user plane (RAN-UPF UP) connection on the NG-U interface. The resource-related information of the RAN and UPF user plane (RAN-UPF UP) connection on the NG-U interface includes at least one of the following: endpoint information of the UPF for a transport bearer, service type or function type, service data rate, and information related to Quality of Service (QoS). As an embodiment, the RAN and UPF user plane (RAN-UPF UP) connection establishment request message may be an existing PDU Session Resource Setup Request message, and includes at least one of the following enhancements and modifications: defining a new PDU session type for the RAN-CNSMF service; QoS flow configuration-related information is optional because the RAN and UPF user plane (RAN-UPF UP) connection does not need to be mapped to a Data Radio Bearer (DRB); and replacing UE-related identification or address information with identification or address information of the network node of the RAN 20 (e.g., gNB).
6a: The AMF 30b sends a RAN and UPF user plane (RAN-UPF UP) connection establishment response message (as an example of the third connection establishment response message) to the SMF 30c. The message includes at least one of the following: identification or address information of the network node of the RAN 20 (e.g., gNB), identification or address information related to the AMF, identification or address information of the SMF, identification or address information of the UPF, and resource-related information of the RAN and UPF user plane (RAN-UPF UP) connection on the NG-U interface. The resource-related information of the RAN and UPF user plane (RAN-UPF UP) connection on the NG-U interface includes at least endpoint information of the RAN 20 (gNB) for the transport bearer. As an embodiment, the RAN and UPF user plane (RAN-UPF UP) connection establishment response message may be an existing PDU Session Resource Setup Response message, wherein QoS flow configuration-related information is optional because the RAN and UPF user plane (RAN-UPF UP) connection does not need to be mapped to a DRB; and UE-related identification or address information is replaced with identification or address information of the network node of the RAN 20 (e.g., gNB).
5b: The Session Management Function (SMF) 30c sends a connection establishment request message to the User Plane Function (UPF) 30d for a connection between a network node of the Radio Access Network (RAN) 20 and the Core Network Service Management Function (CNSMF). This message is an example of the fourth connection establishment request message, and may be, for example, a RAN-UPF User Plane (UP) connection and UPF-CNSMF UP connection establishment request message. The message includes at least one of the following pieces of information: identification or address information of the network node (for example, a gNB) of the RAN 20, identification or address information of the CNSMF, identification or address information related to the Access and Mobility Management Function (AMF), identification or address information of the SMF, identification or address information of the UPF, information related to resources for the RAN-UPF UP connection on the NG-U interface, and information related to resources for the UPF-CNSMF connection on the N-SP interface. The information related to resources for the RAN-UPF UP connection on the NG-U interface includes at least one of the following: endpoint information of the RAN 20 for a transmission bearer, a service type or a function type, a service data rate, and information related to service Quality of Service (QoS). The information related to resources for the UPF-CNSMF connection on the N-SP interface includes at least one of the following: endpoint information of the CNSMF for a transmission bearer, a service type or a function type, a service data rate, and information related to service QoS. As an embodiment, the RAN-UPF UP connection establishment request message may be an existing PDU Session Resource Setup Request message, and includes at least one of the following enhancements and modifications: a new PDU Session Type is defined for the UPF-CNSMF service; QoS flow configuration-related information is optional because the RAN-UPF UP connection does not need to be mapped to a Data Radio Bearer (DRB); and UE-related identification or address information is replaced with non-UE-related identification or address information (such as identification or address information of a node (gNB), a cell, a function, or a service).
6b: The UPF 30d sends a RAN-UPF UP connection and UPF-CNSMF UP connection establishment response message to the SMF 30c (as an example of the fourth connection establishment response message). The message includes at least one of the following pieces of information: identification or address information of the network node (for example, a gNB) of the RAN 20, identification or address information of the CNSMF, identification or address information related to the AMF, identification or address information of the SMF, identification or address information of the UPF, information related to resources for the RAN-UPF UP connection on the NG-U interface, and information related to resources for the UPF-CNSMF connection on the N-SP interface. The information related to resources for the RAN-UPF UP connection on the NG-U interface at least includes endpoint information of the UPF for a transmission bearer on the NG-U interface. The information related to resources for the UPF-CNSMF connection on the N-SP interface at least includes endpoint information of the UPF for a transmission bearer on the N-SP interface. As an embodiment, the RAN-UPF UP connection establishment response message may be an existing PDU Session Resource Setup Response message, wherein QoS flow configuration-related information is optional because the RAN-UPF UP connection does not need to be mapped to a DRB; UE-related identification or address information is replaced with identification or address information of the network node (for example, a gNB) of the RAN 20; and UE-related identification or address information is replaced with non-UE-related identification or address information (such as identification or address information of a node (gNB), a cell, a function, or a service).
5c: The SMF 30c sends a connection establishment request message to the CNSMF 30g for a connection between the core network user plane network node UPF and the CNSMF (as an example of the fifth connection establishment request message, for example, a UPF-CNSMF UP connection establishment request message). The message includes at least one of the following pieces of information: identification or address information of the network node (for example, a gNB) of the RAN 20, identification or address information of the UPF, identification or address information of the SMF, identification or address information of the CNSMF, and information related to resources for the UPF-CNSMF UP connection on the N-SP interface. The information related to resources for the UPF-CNSMF UP connection on the N-SP interface includes at least one of the following: endpoint information of the UPF for a transmission bearer, a service type or a function type, a service data rate, and information related to service QoS.
6c: The CNSMF 30g sends a UPF-CNSMF UP connection establishment response message to the SMF 30c (as an example of the fifth connection establishment response message). The message includes at least one of the following pieces of information: identification or address information of the network node (for example, a gNB) of the RAN 20, identification or address information of the UPF, identification or address information of the SMF, identification or address information of the CNSMF, and information related to resources for the UPF-CNSMF UP connection on the N-SP interface. The information related to resources for the UPF-CNSMF UP connection on the N-SP interface at least includes endpoint information of the CNSMF for a transmission bearer.
7: The AMF 30b sends a connection establishment request message to the RAN 20 (gNB) for a connection between the network node of the RAN 20 and the core network user plane function network node UPF 30d (as an example of the first connection establishment request message, for example, a RAN-UPF UP connection establishment request message). The message includes at least one of the following pieces of information: identification or address information related to the network node (for example, a gNB) of the RAN 20, identification or address information related to the AMF, identification or address information of the SMF, identification or address information of the UPF, and information related to resources for the RAN-UPF UP connection on the NG-U interface. The information related to resources for the RAN-UPF UP connection on the NG-U interface includes at least one of the following: endpoint information of the UPF for a transmission bearer, a service type or a function type, a service data rate, and information related to service QoS. As an embodiment, the RAN-UPF UP connection establishment request message may be an existing PDU Session Resource Setup Request message, and is enhanced and modified according to the requirements of the RAN-CNSMF UP service. The enhancements and modifications include at least one of the following: a new PDU Session Type is defined for the RAN-CNSMF service; QoS flow configuration-related information is optional because the RAN-UPF UP connection does not need to be mapped to a DRB; and UE-related identification or address information is replaced with identification or address information of the network node (for example, a gNB) of the RAN 20.
8: The RAN 20 (gNB) sends a RAN-UPF UP connection establishment response message to the AMF 30b (as an example of the first connection establishment response message). The message includes at least one of the following pieces of information: identification or address information of the network node (for example, a gNB) of the RAN 20, identification or address information related to the AMF, identification or address information of the SMF, identification or address information of the UPF, and information related to resources for the RAN-UPF UP connection on the NG-U interface. The information related to resources for the RAN-UPF UP connection on the NG-U interface at least includes endpoint information of the RAN 20 (gNB) for a transmission bearer. As an embodiment, the RAN-UPF UP connection establishment response message may be an existing PDU Session Resource Setup Response message, wherein QoS flow configuration-related information is optional because the RAN-UPF UP connection does not need to be mapped to a DRB; and UE-related identification or address information is replaced with identification or address information of the network node (for example, a gNB) of the RAN 20.
9: The SMF 30c sends a user plane connection establishment complete message to the UPF 30d (as an example of the fourth connection establishment complete message). The message at least includes endpoint information of the RAN 20 (gNB) for the transmission bearer of the RAN-UPF UP connection on the NG-U interface, and/or endpoint information of the CNSMF for the transmission bearer of the UPF-CNSMF UP connection on the N-SP interface.

In another embodiment, if the AMF and the SMF are a single network node, message exchange and processing between the AMF and the SMF in the foregoing flow are completed by the internal implementation of the network node. Message exchange and processing in the flow between the combined AMF/SMF node and other network nodes are implemented between that network node and the other network nodes.

Specifically, for different services and functions, the Core Network Service Management Function (CNSMF) node, the SP protocol, and the N-SP interface can be the same or different. For example, for AI-related services and functions, the CNSMF node may be the existing Network Data Analytics Function (NWDAF), and its corresponding N-SP interface and SP protocol can be designed with reference to the existing NL1 interface and NRPPa protocol, respectively. For radio sensing services, its CNSMF node needs to be redefined and introduced, for example, as a Radio Sensing Management Function (RSMF), and its corresponding N-SP interface and SP protocol can be designed with reference to the existing NL1 interface and NRPPa protocol, respectively.

### Embodiment 5: User Plane Connection Between Network Nodes for Services or Functions of RAN and DN

Generally, a certain service or function involves network nodes of a Radio Access Network (RAN) 20 (gNB) and a Data Network (DN). Between the network nodes of the RAN 20 and the DN, there is data interaction with a relatively large data volume and/or in real time, for example, a radio sensing service, which is referred to herein as a RAN-DN service. To support the data interaction requirement, a user plane connection, i.e., a connection-oriented communication link, is established between the RAN 20 and a User Plane Function (UPF) network node 30d of a Core Network (CN), and between the UPF 30d and a DN 40 network node.

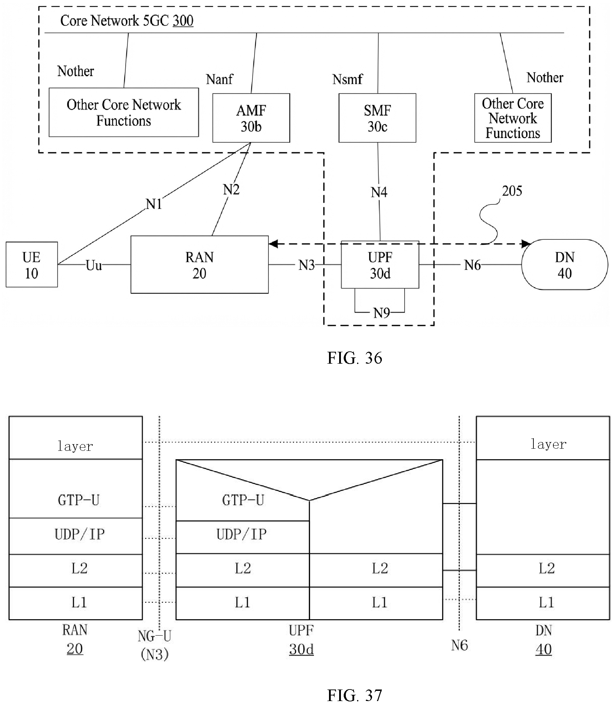

As shown in FIG. 36, data flow 205 represents the data interaction on the user plane connection for the RAN-DN service. This embodiment involves establishing a dedicated user plane connection on the N3 interface, i.e., NG-U, between the RAN 20 and the UPF 30d to support the data interaction requirement.

FIG. 37 is a protocol stack model for the user plane connection between the RAN 20 and the DN. The user plane connection of the NG-G interface is a connection based on the GPRS Tunnelling Protocol for the user plane (GTP-U) protocol. Specifically, these services or functions are non-User Equipment (UE) associated. That is, the establishment of these services and functions is not associated with a specific UE, but is related to a cell, a base station (e.g., a gNB of NR), or a specific function or service, and these services or functions may involve multiple cells or base stations. Data corresponding to non-UE associated services or functions is called non-UE associated data, even if this data may originate from or be related to a specific UE.

Specifically, the transmission process of an application layer data packet from the RAN 20 to the DN 40 is as follows:
1.The RAN 20 sends the application layer data packet to the UPF 30d via the NG-U interface.
2.The UPF 30d receives the application layer data packet from the NG-U interface and then forwards it to the DN via the N6 interface.
3.The DN receives the application layer data packet via the N6 interface.

The transmission process of a user plane application layer data packet from the DN to the RAN 20 is the reverse of the above process, where the N6 interface is an existing interface in 5GC.

To establish the NG-U (N3) user plane connection within the user plane connection between the RAN 20 and the DN, the control plane procedure of the NG Application Protocol (NGAP) of the NG-C (N2) interface needs to be enhanced and modified, involving network nodes such as the RAN, UPF, Access and Mobility Management Function (AMF), and Session Management Function (SMF).

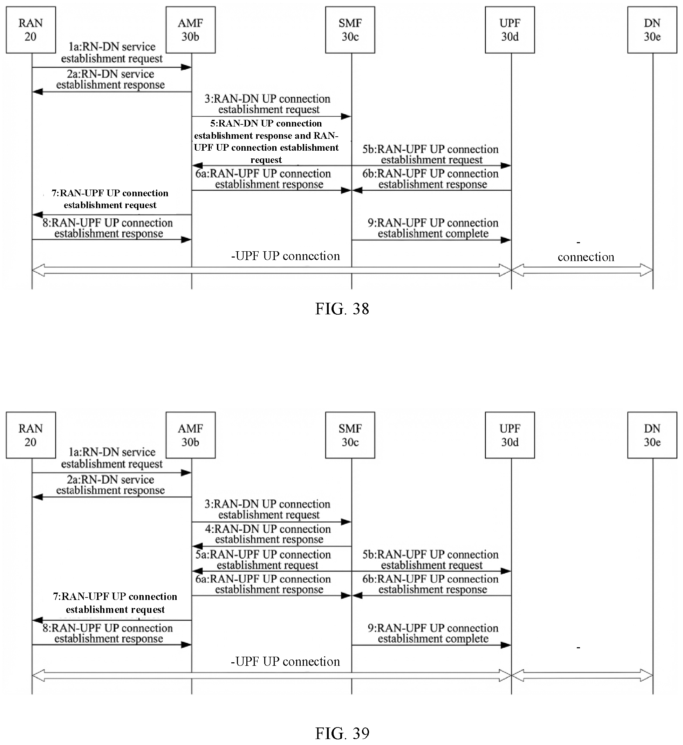

FIG. 38 is a schematic diagram of a control plane procedure for enhancing and modifying the NGAP protocol of the NG-C (N2) interface, where the procedures and their numbering do not imply a specific order. In addition, the control plane signaling procedure may also include only one or more of the procedures. The main procedures are described as follows:
1a: The RAN 20 (gNB) sends a RAN-DN service establishment request message to the AMF 30b. The message includes at least one of the following pieces of information: identification or address information of the network node (e.g., gNB) of the RAN, identification or address information related to the AMF, and service-related information (such as a service type or a function type, and/or a service data rate).
2a: The AMF 30b sends a RAN-DN service establishment response message to the RAN 20 node.
3: The AMF 30b sends to the SMF 30c a connection establishment request message for a connection between the network node of the RAN and the UPF (as an example of the second connection establishment request message, for example, a RAN 20 and UPF 30d user plane (RAN-UPF UP) connection establishment request message). Here, the RAN-DN UP connection refers to the aforementioned NG-U user plane connection. The message includes at least one of the following pieces of information: identification or address information of the network node (e.g., gNB) of the RAN, identification or address information related to the AMF, identification or address information of the SMF, and service-related information related to the RAN-DN UP connection (such as a service type or a function type, and/or a service data rate).
5: The SMF 30c sends to the AMF 30b a RAN-DN UP connection establishment response message (as an example of the second connection establishment response message) and a connection establishment request message for a connection between the network node of the RAN and the UPF (as an example of the third connection establishment request message, for example, a RAN 20 and UPF 30d user plane (RAN-UPF UP) connection establishment request message).

Referring to FIG. 39, in another embodiment, step 5 may be divided into two steps, including steps 4 and 5a.
4: The SMF 30c sends a RAN-DN UP connection establishment response message (as an example of the second connection establishment response message) to the AMF 30b.
5a: The SMF 30c sends to the AMF 30b a connection establishment request message for a connection between the network node of the RAN and the UPF (as an example of the third connection establishment request message, for example, a RAN 20 and UPF 30d user plane (RAN-UPF UP) connection establishment request message). The message includes at least one of the following pieces of information: identification or address information of the network node (e.g., gNB) of the RAN, identification or address information related to the AMF, identification or address information of the SMF, identification or address information of the UPF, and information related to resources for the RAN 20 and UPF 30d user plane (RAN-UPF UP) connection on the NG-U interface. The information related to resources for the RAN 20 and UPF 30d user plane (RAN-UPF UP) connection on the NG-U interface includes at least one of the following: endpoint information of the UPF for a transport bearer, a service type or a function type, a service data rate, and information related to service Quality of Service (QoS). As an embodiment, the RAN 20 and UPF 30d user plane (RAN-UPF UP) connection establishment request message may be an existing Protocol Data Unit (PDU) Session Resource Setup Request message, and includes at least one of the following enhancements and modifications: a new PDU Session Type is defined for the RAN-DN service; configuration information related to a QoS flow is optional, because the RAN 20 and UPF 30d user plane (RAN-UPF UP) connection does not need to be mapped to a Data Radio Bearer (DRB); and UE-related identification or address information is replaced with identification or address information of the network node (e.g., gNB) of the RAN.
6a: The AMF 30b sends a RAN 20 and UPF 30d user plane (RAN-UPF UP) connection establishment response message (as an example of the third connection establishment response message) to the SMF 30c. The message includes at least one of the following pieces of information: identification or address information of the network node (e.g., gNB) of the RAN, identification or address information related to the AMF, identification or address information of the SMF, identification or address information of the UPF, and information related to resources for the RAN 20 and UPF 30d user plane (RAN-UPF UP) connection on the NG-U interface. The information related to resources for the RAN 20 and UPF 30d user plane (RAN-UPF UP) connection on the NG-U interface at least includes endpoint information of the RAN (gNB) for the transport bearer. As an embodiment, the RAN and UPF user plane (RAN-UPF UP) connection establishment response message may be an existing PDU Session Resource Setup Response message, in which configuration information related to a QoS flow is optional because the RAN and UPF user plane (RAN-UPF UP) connection does not need to be mapped to a DRB; and UE-related identification or address information is replaced with identification or address information of the network node (e.g., gNB) of the RAN.
5b: The SMF 30c sends to the UPF 30d a connection establishment request message for a connection between the network node of the RAN and the UPF (as an example of the fourth connection establishment request message, for example, a RAN and UPF user plane (RAN-UPF UP) connection establishment request message). The message includes at least one of the following pieces of information: identification or address information of the network node (e.g., gNB) of the RAN, identification or address information related to the AMF, identification or address information of the SMF, identification or address information of the UPF, and information related to resources for the RAN and UPF user plane (RAN-UPF UP) connection on the NG-U interface. The information related to resources for the RAN and UPF user plane (RAN-UPF UP) connection on the NG-U interface includes at least one of the following: endpoint information of the RAN (gNB) for a transport bearer, a service type or a function type, a service data rate, and information related to service QoS. As an embodiment, the RAN and UPF user plane (RAN-UPF UP) connection establishment request message may be an existing PDU Session Resource Setup Request message, and includes at least one of the following enhancements and modifications: a new PDU Session Type is defined for the RAN-DN service; configuration information related to a QoS flow is optional, because the RAN and UPF user plane (RAN-UPF UP) connection does not need to be mapped to a DRB; and UE-related identification or address information is replaced with identification or address information of the network node (e.g., gNB) of the RAN.
6b: The UPF 30d sends a RAN and UPF user plane (RAN-UPF UP) connection establishment response message (as an example of the fourth connection establishment response message) to the SMF 30c. The message includes at least one of the following pieces of information: identification or address information of the network node (e.g., gNB) of the RAN, identification or address information related to the AMF, identification or address information of the SMF, identification or address information of the UPF, and information related to resources for the RAN and UPF user plane (RAN-UPF UP) connection on the NG-U interface. The information related to resources for the RAN and UPF user plane (RAN-UPF UP) connection on the NG-U interface at least includes endpoint information of the UPF for the transport bearer on the NG-U interface. As an embodiment, the RAN and UPF user plane (RAN-UPF UP) connection establishment response message may be an existing PDU Session Resource Setup Response message, in which configuration information related to a QoS flow is optional because the RAN and UPF user plane (RAN-UPF UP) connection does not need to be mapped to a DRB; and UE-related identification or address information is replaced with non-UE-related identification or address information (such as identification or address information of a node (gNB), a cell, a function, a service, or the like).
7: The AMF 30b sends to the RAN 20 (gNB) a connection establishment request message for a connection between the network node of the RAN and the UPF (as an example of the first connection establishment request message, for example, a RAN and UPF user plane (RAN-UPF UP) connection establishment request message). The message includes at least one of the following pieces of information: identification or address information of the network node (e.g., gNB) of the RAN, identification or address information related to the AMF, identification or address information of the SMF, identification or address information of the UPF, and information related to resources for the RAN and UPF user plane (RAN-UPF UP) connection on the NG-U interface. The information related to resources for the RAN and UPF user plane (RAN-UPF UP) connection on the NG-U interface includes at least one of the following: endpoint information of the UPF for a transport bearer, a service type or a function type, a service data rate, and information related to service QoS. As an embodiment, the RAN and UPF user plane (RAN-UPF UP) connection establishment request message may be an existing PDU Session Resource Setup Request message, and includes at least one of the following enhancements and modifications: a new PDU Session Type is defined for the RAN-DN service; configuration information related to a QoS flow is optional, because the RAN and UPF user plane (RAN-UPF UP) connection does not need to be mapped to a DRB; and UE-related identification or address information is replaced with non-UE-related identification or address information (such as identification or address information of a node (gNB), a cell, a function, a service, or the like).
8: The Access and Mobility Management Function (AMF) 30b sends a Radio Access Network (RAN) and User Plane Function (UPF) user plane (RAN-UPF UP) connection establishment response message (as an example of a first connection establishment response message) to the Session Management Function (SMF) 30c. The message includes at least one of the following: identification or address information of a network node (e.g., gNB) of the RAN, identification or address information of the AMF, identification or address information of the SMF, identification or address information of the UPF, and information related to resources for the RAN-UPF UP connection on the NG-U interface. The information related to resources for the RAN-UPF UP connection on the NG-U interface includes at least endpoint information of the RAN (gNB) for a transport bearer. In one embodiment, the RAN-UPF UP connection establishment response message may be an existing PDU Session Resource Setup Response message, wherein configuration information related to a Quality of Service (QoS) flow is optional because the RAN-UPF UP connection does not need to be mapped to a Data Radio Bearer (DRB), and UE-related identification or address information is replaced with identification or address information of the network node (e.g., gNB) of the RAN.
9: The SMF 30c sends a user plane connection establishment complete message (as an example of a fourth connection establishment complete message) to the UPF 30d. The message includes at least: endpoint information of the RAN (gNB) for the transport bearer of the RAN-UPF UP connection on the NG-U interface, and/or endpoint information of a Data Network (DN) node for the transport bearer of the UPF-DN UP connection on the N6 interface.

In another embodiment, if the AMF and the SMF are implemented as a single network node, then in the foregoing procedure, message exchange and processing between the AMF and the SMF are handled internally by that network node, while message exchange and processing between that network node and other network nodes are performed by the respective nodes.

### Embodiment 6: User Plane Connection between RAN and DN for Group UE Service

In some application scenarios, a service or function involves network nodes of two or more UEs and a Data Network (DN), which is referred to as a group UE service. In this service, two or more UEs are backups for each other. That is, in the downlink direction from the DN to the multiple UEs, the RAN side needs to perform one-to-many distribution of service data. In the uplink direction from the multiple UEs to the DN, the RAN side needs to perform many-to-one selective forwarding of service data from the multiple UEs.

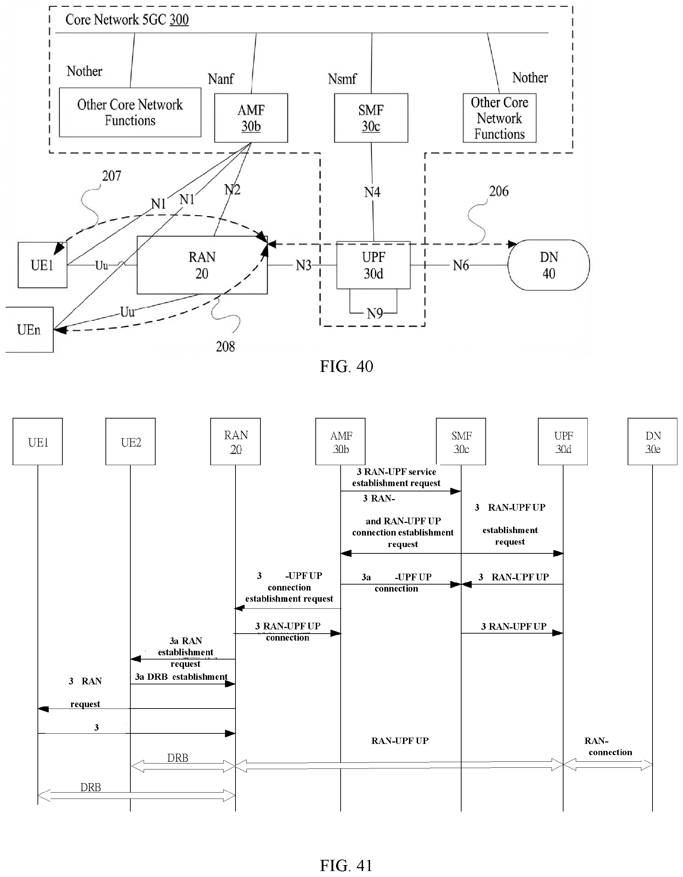

As shown in FIG. 40, the data flows are indicated by dashed lines 206, 207, and 208. Regarding the user plane connection carrying service data, in the downlink direction, the N3 (NG-U) user plane connection from the UPF 30d to the RAN 20 (e.g., the user plane connection for data flow 206) is mapped at the RAN 20 to Uu interface user plane connections from the RAN 20 to two or more UEs (UE1, ..., UEn) (e.g., the user plane connections for data flows 207 and 208). In the uplink direction, one of the Uu interface user plane connections from the two or more UEs (UE1, ..., UEn) to the RAN 20 is selected at the RAN 20 and mapped to the N3 (NG-U) user plane connection from the RAN 20 to the UPF 30d. As an embodiment, the N3 (NG-U) user plane connection between the RAN 20 and the UPF 30d may adopt the NG-U interface standard as shown in FIG. 4, i.e., a QoS flow and a General Packet Radio Service Tunneling Protocol-User Plane (GTP-U) bearer. The user plane connection of the Uu interface between the RAN and the UE may adopt the Uu interface standard as shown in FIG. 5, i.e., a Data Radio Bearer (DRB).

To establish the user plane connection for the group UE service, the control plane procedures of relevant control plane protocols need to be enhanced and modified, involving network nodes such as UE, RAN, UPF, AMF, and SMF.

FIG. 41 is a schematic diagram of a related signaling flow, where the procedures and their numbering do not limit their sequence. In addition, the control plane signaling flow may also include only one or more of these procedures. The main procedures are described as follows:
1: The AMF 30b sends to the SMF 30c a request message to establish a connection between the network node of the Radio Access Network (RAN) and the User Plane Function (UPF) (as an example of the second connection establishment request message, e.g., a RAN and UPF user plane (RAN-UPF UP) connection establishment request message). The message includes at least one of the following information: identification or address information of the network node (e.g., gNB) of the Radio Access Network (RAN), identification or address information related to the Access and Mobility Management Function (AMF), identification or address information of the Session Management Function (SMF), and service-related information related to the RAN-DN service (such as service type or function type, and/or service data rate). As an embodiment, the procedure and message may be the procedure and message related to a PDU Session between the SMF/UPF in the existing 5GC. Specifically, the message may also include identification information related to at least two User Equipment (UEs) to indicate a service type or function type related to the at least two UEs.
3: The SMF 30c sends to the AMF 30b a RAN-DN service establishment response message (as an example of the second connection establishment response message) and a request message to establish a connection between the network node of the Radio Access Network (RAN) and the User Plane Function (UPF) (as an example of the third connection establishment request message, e.g., a RAN and UPF user plane (RAN-UPF UP) connection establishment request message).

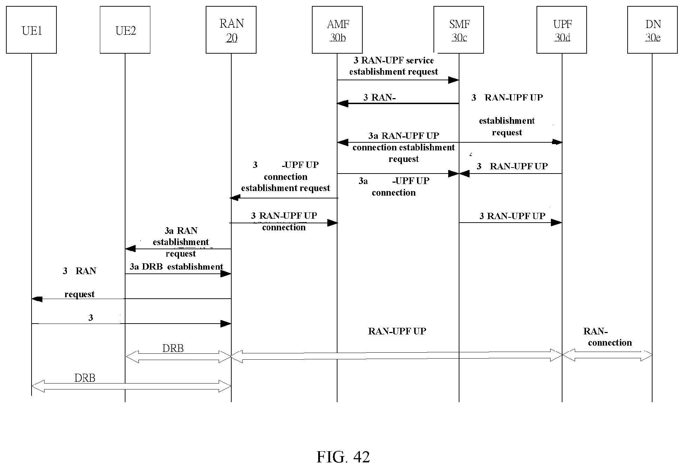

Referring to FIG. 42, in another embodiment, step 3 may be divided into two steps, including steps 2 and 3a.
2: The SMF 30c sends a RAN-DN service establishment response message (as an example of the second connection establishment response message) to the AMF 30b.
3a: The SMF 30c sends to the AMF 30b a request message to establish a connection between the network node of the Radio Access Network (RAN) and the User Plane Function (UPF) (as an example of the third connection establishment request message, e.g., a RAN and UPF user plane (RAN-UPF UP) connection establishment request message). The message includes at least one of the following information: identification or address information of the network node (e.g., gNB) of the Radio Access Network (RAN), identification or address information related to the Access and Mobility Management Function (AMF), identification or address information of the Session Management Function (SMF), identification or address information of the UPF, information related to resources for the RAN and UPF user plane (RAN-UPF UP) connection on the NG-U interface, identification information of at least two UEs, and information related to resources on the Uu interface. The information related to resources for the RAN and UPF user plane (RAN-UPF UP) connection on the NG-U interface includes at least one of the following information: endpoint information of the UPF for a transport bearer, service type or function type, service data rate, and information related to service Quality of Service (QoS). As an embodiment, the RAN and UPF user plane (RAN-UPF UP) connection establishment request message may be an existing PDU Session Resource Setup Request message, with at least one of the following enhancements and modifications: defining a new PDU session Type for the RAN-DN service; and including identification information related to at least two UEs and information related to resources on the Uu interface.
4a: The AMF 30b sends a RAN and UPF user plane (RAN-UPF UP) connection establishment response message (as an example of the third connection establishment response message) to the SMF 30c. The message includes at least one of the following information: identification or address information of the network node (e.g., gNB) of the Radio Access Network (RAN), identification or address information related to the Access and Mobility Management Function (AMF), identification or address information of the Session Management Function (SMF), identification or address information of the UPF, and information related to resources for the RAN and UPF user plane (RAN-UPF UP) connection on the NG-U interface. The information related to resources for the RAN and UPF user plane (RAN-UPF UP) connection on the NG-U interface includes at least endpoint information of the RAN (gNB) for the transport bearer. As an embodiment, the RAN and UPF user plane (RAN-UPF UP) connection establishment response message may be an existing PDU Session Resource Setup Response message.
3b/4b: These are the request and response messages for the RAN and UPF user plane (RAN-UPF UP) connection establishment process between the SMF/UPF, respectively. As an embodiment, the procedure and messages may be the procedure and messages related to a PDU Session between the SMF/UPF in the existing 5GC.
3b: The SMF 30c sends to the UPF 30d a request message to establish a connection between the network node of the Radio Access Network (RAN) and the User Plane Function (UPF) (as an example of the fourth connection establishment request message, e.g., a RAN and UPF user plane (RAN-UPF UP) connection establishment request message). The message includes at least one of the following information: identification or address information of the network node (e.g., gNB) of the Radio Access Network (RAN), identification or address information related to the Access and Mobility Management Function (AMF), identification or address information of the Session Management Function (SMF), identification or address information of the UPF, and information related to resources for the RAN and UPF user plane (RAN-UPF UP) connection on the NG-U interface. The information related to resources for the RAN and UPF user plane (RAN-UPF UP) connection on the NG-U interface includes at least one of the following information: endpoint information of the RAN (gNB) for the transport bearer, service type or function type, service data rate, and information related to service Quality of Service (QoS). As an embodiment, the RAN and UPF user plane (RAN-UPF UP) connection establishment request message may be an existing PDU Session Resource Setup Request message, with at least one of the following enhancements and modifications: defining a new PDU session Type for the RAN-DN service; configuration information related to a QoS flow is optional because the RAN and UPF user plane (RAN-UPF UP) connection does not need to be mapped to a DRB; and replacing UE-related identification or address information with identification or address information of the network node (e.g., gNB) of the Radio Access Network (RAN).
4b: The UPF 30d sends a RAN and UPF user plane (RAN-UPF UP) connection establishment response message (as an example of the fourth connection establishment response message) to the SMF 30c. The message includes at least one of the following information: identification or address information of the network node (e.g., gNB) of the Radio Access Network (RAN), identification or address information related to the Access and Mobility Management Function (AMF), identification or address information of the Session Management Function (SMF), identification or address information of the UPF, and information related to resources for the RAN and UPF user plane (RAN-UPF UP) connection on the NG-U interface. The information related to resources for the RAN and UPF user plane (RAN-UPF UP) connection on the NG-U interface includes at least endpoint information of the UPF for the transport bearer of the NG-U interface. As an embodiment, the RAN and UPF user plane (RAN-UPF UP) connection establishment response message may be an existing PDU Session Resource Setup Response message, wherein configuration information related to a QoS flow is optional because the RAN and UPF user plane (RAN-UPF UP) connection does not need to be mapped to a DRB; and UE-related identification or address information is replaced with non-UE-associated identification or address information (such as identification or address information of a node (gNB), a cell, a function, or a service).
5: The AMF 30b sends to the RAN 20 (gNB) a request message to establish a connection between the network node of the Radio Access Network (RAN) and the User Plane Function (UPF) (as an example of the first connection establishment request message, e.g., a RAN and UPF user plane (RAN-UPF UP) connection establishment request message). The message includes at least one of the following information: identification or address information of the network node (e.g., gNB) of the Radio Access Network (RAN), identification or address information related to the Access and Mobility Management Function (AMF), identification or address information of the Session Management Function (SMF), identification or address information of the UPF, information related to resources for the RAN and UPF user plane (RAN-UPF UP) connection on the NG-U interface, identification information of at least two UEs, and information related to resources on the Uu interface. The information related to resources for the RAN and UPF user plane (RAN-UPF UP) connection on the NG-U interface includes at least one of the following information: endpoint information of the UPF for a transport bearer, service type or function type, service data rate, and information related to service Quality of Service (QoS). As an embodiment, the RAN and UPF user plane (RAN-UPF UP) connection establishment request message may be an existing PDU Session Resource Setup Request message, with at least one of the following enhancements and modifications: defining a new PDU session Type for the RAN-DN service; and including identification information related to at least two UEs and information related to resources on the Uu interface.
6: After receiving the RAN and UPF user plane (RAN-UPF UP) connection establishment request message, the RAN 20 (gNB) maps the UP connection to DRBs related to the at least two UEs in the request message. The AMF 30b sends a RAN and UPF user plane (RAN-UPF UP) connection establishment response message (as an example of the first connection establishment response message) to the SMF 30c. The message includes at least one of the following information: identification or address information of the network node (e.g., gNB) of the Radio Access Network (RAN), identification or address information related to the Access and Mobility Management Function (AMF), identification or address information of the Session Management Function (SMF), identification or address information of the UPF, and information related to resources for the RAN and UPF user plane (RAN-UPF UP) connection on the NG-U interface. The information related to resources for the RAN and UPF user plane (RAN-UPF UP) connection on the NG-U interface includes at least endpoint information of the RAN (gNB) for the transport bearer. As an embodiment, the RAN and UPF user plane (RAN-UPF UP) connection establishment response message may be an existing PDU Session Resource Setup Response message.

A Data Radio Bearer (DRB) establishment request message (DRB request message) is sent by a network node of the Radio Access Network (RAN) 20 to the plurality of User Equipment (UEs) of the RAN 20.

7a and 7b: According to the information in procedure 5 and/or 6, the RAN 20 sends a Uu DRB establishment request message to each of the two or more UEs (UE1, ..., UEn). As an embodiment, the Uu DRB establishment request message may be an existing Radio Resource Control Reconfiguration (RRCReconfiguration) message.

8a and 8b: The two or more UEs (UE1, ..., UEn) each send a Uu DRB establishment response message to the RAN 20. As an embodiment, the Uu DRB establishment response message may be an existing Radio Resource Control Reconfiguration Complete (RRCReconfigurationComplete) message.

9: The Session Management Function (SMF) 30c sends a user plane connection establishment complete message (as an example of the fourth connection establishment complete message) to the User Plane Function (UPF) 30d. The message includes at least endpoint information of the RAN (gNB) for the transport bearer of the RAN and UPF user plane (RAN-UPF UP) connection on the NG-U interface, and/or endpoint information of the Data Network (DN) node for the transport bearer of the UPF-DN UP connection on the N6 interface.

In another embodiment, if the Access and Mobility Management Function (AMF) and the SMF are a single network node, the message exchange and procedure processing between the AMF and the SMF in the above procedure are completed by the internal implementation of that network node, while the message flow and procedure processing between that network node and other network nodes are implemented between that network node and the other network nodes.

Specifically, during the establishment of the aforementioned RAN and UPF user plane (RAN-UPF UP) connection and the Uu DRBs for the two or more UEs, the following mapping relationship is established in the RAN 20 between the RAN-UPF UP connection and the Uu DRBs of the two or more UEs, based on the information from procedure 1:
1.In the downlink direction, the RAN-UPF UP connection is simultaneously mapped to the Uu DRBs of the two or more UEs (UE1, ..., UEn).
2.In the uplink direction, one of the Uu DRBs of the two or more UEs (UE1, ..., UEn) is selected to be mapped to the established RAN-UPF UP connection.

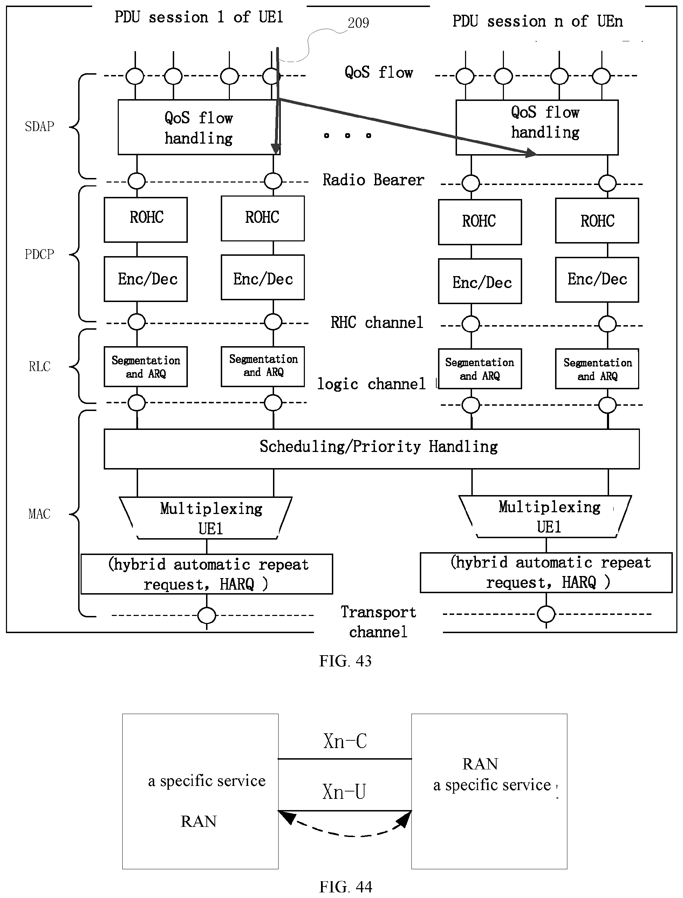

Specifically, corresponding to the Uu interface user plane protocol shown in FIG. 5, as shown in FIG. 43, the line 209 represents the mapping relationship established above, which is further described as follows:
1.In the downlink direction, a Quality of Service (QoS) flow related to the RAN and UPF user plane (RAN-UPF UP) connection is, at the Service Data Adaptation Protocol (SDAP) layer of the RAN 20, simultaneously mapped to a Uu DRB for each of the two or more UEs (UE1, ..., UEn). Specifically, in the RAN 20, when a Service Data Unit (SDU) is received from the QoS flow, two or more identical data packets are obtained through a duplication operation and then sent to the corresponding DRBs of the two or more UEs, respectively.
2.In the uplink direction, one of the Data Radio Bearers (DRBs) associated with the Uu interface from the two or more UEs (UE1, ..., UEn) is selected in the RAN 20 to be mapped to a QoS flow related to the RAN and UPF user plane (RAN-UPF UP) connection; i.e., at any given moment, one DRB from among the DRBs of the two or more UEs (UE1, ..., UEn) is selected and mapped to the QoS flow. Specifically, when that one DRB is selected and mapped to the corresponding QoS flow, Service Data Units (SDUs) received from this DRB are sent to the corresponding QoS flow, while SDUs received from other DRBs are discarded, or are discarded after a predetermined condition is met, such as being discarded after being cached for a certain period of time.

Specifically, for the uplink direction, real-time measurement of the data packet reception status of the DRBs of the two or more UEs is performed in the RAN 20. The measurement parameters may be one or more of the following: Block Error Rate (BLER), Packet Error Rate (PER), Protocol Data Unit Set Error Rate (PSER), and uplink radio signal quality corresponding to the DRB. Furthermore, for a DRB currently selected and mapped to the corresponding QoS flow, if the measurement result is lower than a predetermined value, a DRB reselection process is triggered to reselect a DRB with the best measurement result and map it to the corresponding QoS flow.

Specifically, the above embodiment 6 can also be applied to a dual-stack or multi-stack UE. That is, the processes and technologies described above involving two or more UEs are correspondingly applied to the dual stack and multi-stack of a single UE.

### Embodiment 7: User Plane Connection for a Service or Function between RAN Node

Generally, a specific service or function involves two or more Radio Access Network (RAN) nodes, between which data interaction involving a large volume of data and/or real-time data occurs. These RAN nodes have a specific service or function, or a node of another service or function is associated with the RAN node to support the RAN node in completing a specific service or function. For example, it is associated, connected, or interacts with the RAN node as a sub-node for a specific service or function of said RAN node. In view of this, it is necessary to establish a user plane connection, that is, a connection-oriented communication link, between two RAN nodes to meet data interaction requirements.

Taking a 5G RAN (i.e., a RAN node of a 5G mobile communication system, such as a gNB) as an example, to support data interaction related to a specific service or function based on a user plane connection between RAN nodes, a dedicated user plane connection is established between the RAN nodes to support said data interaction.

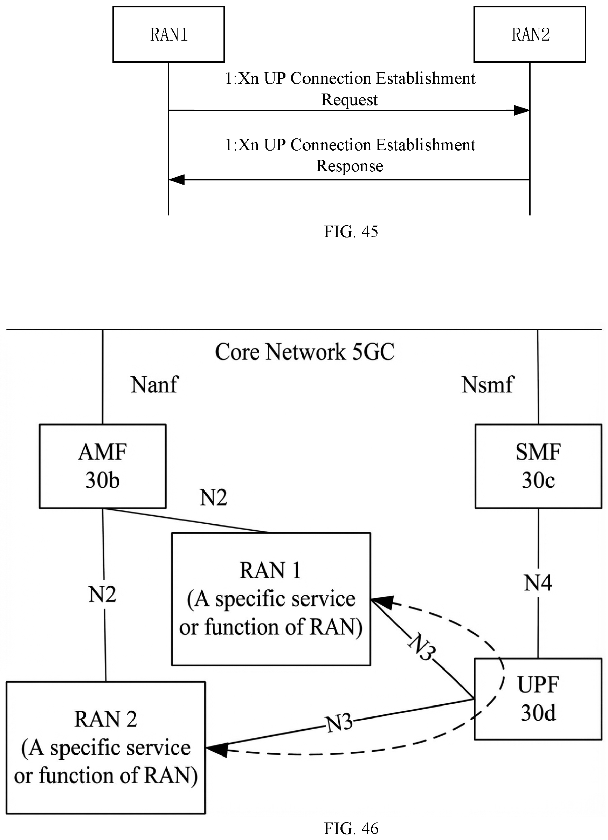

As shown in FIG. 44, if an Xn interface, including Xn^{-C} and Xn^{-U} , is established between RAN nodes, a user plane connection associated with a specific service or function is directly established on the Xn^{-U} interface. As shown in FIG. 3, this user plane connection is usually a data transmission bearer based on the General Packet Radio Service Tunneling Protocol-User Plane (GTP-U) protocol. To establish this user plane connection, it is necessary to design corresponding control plane signaling flows and messages in the XnAP protocol of the Xn^{-C} interface. As shown in FIG. 45, the control plane signaling flow and messages include the following:
1: RAN1 (gNB) sends an Xn UP Connection Establishment Request message (as an example of the first connection establishment request message, for example, an Xn UP Connection Establishment Request message) to RAN2 (gNB). The Xn UP Connection Establishment Request message includes at least one of the following information: identification or address information related to the RAN1 and/or RAN2 node (e.g., gNB), and resource-related information for the user plane (Xn UP) connection between RAN1 and RAN2 on the Xn-U interface. The resource-related information for the Xn UP connection on the Xn-U interface includes at least one of the following information: endpoint information of RAN1 (gNB) for the transport bearer, a service type or function type, a service data rate, and service Quality of Service (QoS) related information.
2: RAN2 (gNB) sends an Xn UP Connection Establishment Response message (as an example of the first connection establishment response message) to RAN1. The message includes at least one of the following information: identification or address information of the RAN2 and/or RAN1 node (e.g., gNB), and resource-related information for the user plane (Xn UP) connection between RAN1 and RAN2 on the Xn-U interface. The resource-related information for the user plane (Xn UP) connection between RAN1 and RAN2 on the Xn-U interface at least includes endpoint information of RAN2 (gNB) for the transport bearer.

As shown in FIG. 46, if an Xn interface is not or cannot be established between RAN nodes, user plane connections associated with a specific service or function can be established separately on the NG-U interface (i.e., N3) between the two RAN nodes and the User Plane Function (UPF) 30d of the Core Network. RAN1 and RAN2 will send data related to said service or function to the UPF 30d through their respective user plane connections with the UPF 30d, and receive data related to said service or function forwarded by the UPF 30d from the other RAN node. As shown in FIG. 3, this user plane connection is usually a data transmission bearer based on the GTP-U protocol. To establish this user plane connection, it is necessary to design related control plane signaling flows and messages in the control plane interface protocols between the relevant network nodes. This includes the NGAP protocol for the NG-C (N2) interface, involving network nodes such as the RAN, the UPF 30d, an Access and Mobility Management Function (AMF) 30b, and a Session Management Function (SMF) 30c.

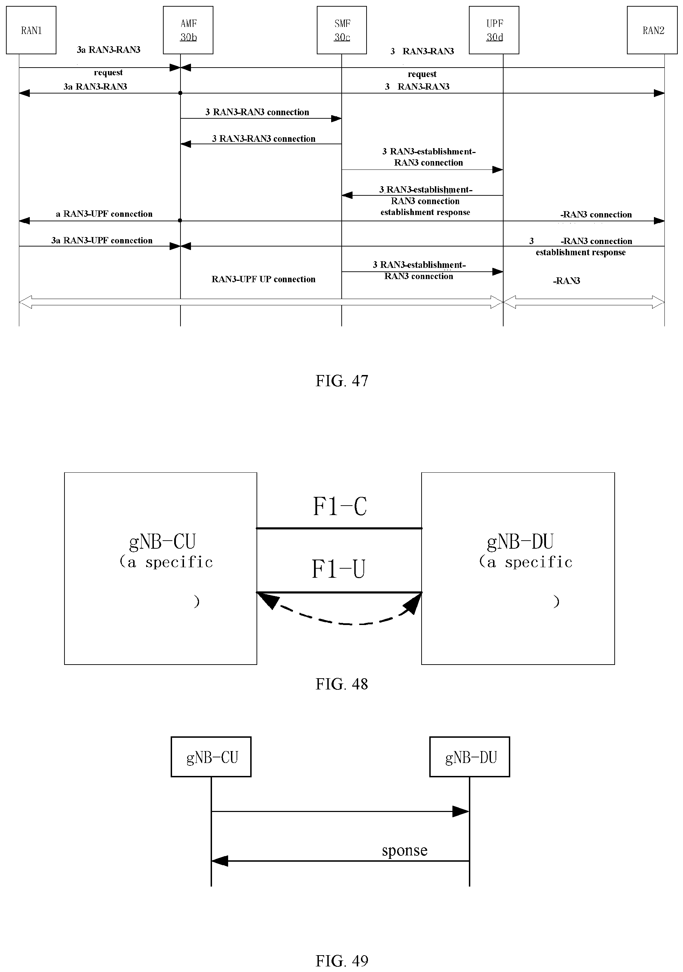

FIG. 47 is a schematic diagram of a signaling flow for interaction between multiple RAN nodes through a core network. The flows and their numbering therein do not limit their sequence. In addition, the control plane signaling flow may also include only one or more of the flows therein. The main flows are described as follows:
1a or 1b: RAN1 (gNB) or RAN2 (gNB) sends a RAN1-RAN2 Service Establishment Request message to the AMF 30b. The message includes at least one of the following information: identification or address information of the RAN1 and/or RAN2 node (e.g., gNB) of the RAN, identification or address information related to the AMF 30b, and service-related information (such as a service type or function type, and/or a service data rate).
2a or 2b: The AMF 30b sends an RN-DN Service Establishment Response message to the RAN2 and/or RAN1 node.
3: The AMF 30b sends a connection establishment request message for a connection between the RAN1 and RAN2 nodes of the RAN to the SMF 30c (as an example of the second connection establishment request message, for example, a RAN1 and RAN2 User Plane (RAN1-RAN2 UP) Connection Establishment Request message). The connection establishment request message includes at least one of the following information: identification or address information of the RAN1 and RAN2 nodes (e.g., gNB) of the RAN, identification or address information related to the AMF 30b, identification or address information of the SMF 30c, and service-related information for the RAN1-RAN2 UP connection (such as a service type or function type, and/or a service data rate).
4: The SMF 30c sends a RAN1-RAN2 UP Connection Establishment Response message (as an example of the second connection establishment response message) to the AMF 30b.
5: The SMF 30c sends a connection establishment request message for a connection between the RAN1 and/or RAN2 node of the RAN and the UPF 30d to the UPF 30d (as an example of the fourth connection establishment request message, for example, a RAN and UPF User Plane (RAN-UPF UP) Connection Establishment Request message). The connection establishment request message includes at least one of the following information: identification or address information of the RAN1 and/or RAN2 node (e.g., gNB) of the RAN, identification or address information related to the AMF 30b, identification or address information of the SMF 30c, identification or address information of the UPF 30d, and resource-related information for the user plane (RAN-UPF UP) connection between RAN1 and/or RAN2 and UPF 30d on the NG-U interface. The resource-related information for the user plane (RAN-UPF UP) connection between RAN1 and/or RAN2 and UPF 30d on the NG-U interface includes at least one of the following information: endpoint information of RAN1 and/or RAN2 (gNB) for the transport bearer, a service type or function type, a service data rate, and service QoS related information.
6: The UPF 30d sends a RAN1 and/or RAN2 and UPF 30d User Plane (RAN-UPF UP) Connection Establishment Response message (as an example of the fourth connection establishment response message) to the SMF 30c. The connection establishment response message includes at least one of the following information: identification or address information of the RAN1 and/or RAN2 node (e.g., gNB) of the RAN, identification or address information related to the AMF 30b, identification or address information of the SMF 30c, identification or address information of the UPF 30d, and resource-related information for the user plane (RAN-UPF UP) connection between RAN1 and/or RAN2 and UPF 30d on the NG-U interface. The resource-related information for the user plane (RAN-UPF UP) connection between RAN1 and/or RAN2 and UPF 30d on the NG-U interface at least includes endpoint information of the UPF 30d for the transport bearer of the NG-U interface with RAN1 and/or RAN2.
7a or 7b: The AMF 30b sends a connection establishment request message for a connection between the RAN1 or RAN2 node of the RAN and the UPF 30d to RAN1 or RAN2 (gNB) (as an example of the first connection establishment request message, for example, a RAN and UPF User Plane (RAN-UPF UP) Connection Establishment Request message). The message includes at least one of the following information: identification or address information of the RAN1 or RAN2 node (e.g., gNB) of the RAN, identification or address information related to the AMF 30b, identification or address information of the SMF 30c, identification or address information of the UPF 30d, and resource-related information for the user plane (RAN-UPF UP) connection between RAN1 or RAN2 and UPF 30d on the NG-U interface. The resource-related information for the user plane (RAN-UPF UP) connection between RAN1 or RAN2 and UPF 30d on the NG-U interface includes at least one of the following information: endpoint information of the UPF 30d for the transport bearer of the NG-U interface with RAN1 or RAN2, a service type or function type, a service data rate, and service QoS related information. As an embodiment, the RAN and UPF User Plane (RAN-UPF UP) Connection Establishment Request message may be an existing PDU Session Resource Setup Request message, and includes at least one of the following enhancements and modifications: a new PDU sessionType is defined for the RAN-DN service; QoS flow configuration information is optional, because the user plane (RAN-UPF UP) connection between the RAN and the UPF does not need to be mapped to a Data Radio Bearer (DRB); and identification or address information not related to a User Equipment (UE) (such as identification or address information of a node (gNB), a cell, a function, or a service, etc.) replaces UE-related identification or address information.
8a or 8b: RAN1 or RAN2 (gNB) sends a RAN and UPF User Plane (RAN-UPF UP) Connection Establishment Response message (as an example of the first connection establishment response message) to the AMF 30b. The connection establishment response message includes at least one of the following information: identification or address information of the RAN1 or RAN2 (gNB) node of the RAN, identification or address information related to the AMF 30b, identification or address information of the SMF 30c, identification or address information of the UPF 30d, and resource-related information for the user plane (RAN-UPF UP) connection between RAN1 or RAN2 (gNB) and the UPF on the NG-U interface. The resource-related information for the user plane (RAN-UPF UP) connection between RAN1 or RAN2 (gNB) and UPF 30d on the NG-U interface at least includes endpoint information of RAN1 or RAN2 (gNB) for the transport bearer of the NG-U interface with RAN1 or RAN2. As an embodiment, the RAN and UPF User Plane (RAN-UPF UP) Connection Establishment Response message may be an existing PDU Session Resource Setup Response message, wherein identification or address information of the network node (e.g., gNB) of the RAN replaces UE-related identification or address information.
9: The SMF 30c sends a connection establishment complete message for a connection between the RAN1 and/or RAN2 node of the RAN and the UPF 30d to the UPF 30d (as an example of the fourth connection establishment complete message), which at least includes endpoint information of RAN1 and/or RAN2 (gNB) for the transport bearer on the NG-U interface for the user plane (RAN-UPF UP) connection between RAN1 and/or RAN2 and UPF 30d.

### Embodiment 8: User Plane Connection for a Service or Function between Intra-RAN Nodes

Generally, a specific service or function involves two or more intra-RAN (Radio Access Network) network nodes, between which data interaction with a relatively large data volume and/or real-time data interaction exists. These RAN network nodes have a specific service or function. In view of this, it is necessary to establish a user plane connection, i.e., a connection-oriented communication link, between two intra-RAN network nodes to meet data interaction requirements.

Taking a 5G RAN (i.e., a RAN node of a 5G mobile communication system, such as a gNB) as an example, to support data interaction related to a specific service or function based on a user plane connection between a gNB-CU and a gNB-DU of the RAN, a dedicated user plane connection is established between the gNB-CU and the gNB-DU to support said data interaction.

As shown in FIG. 48, a user plane connection associated with a specific service or function is established on the F1-U interface. As shown in FIG. 3, this user plane connection is usually a data transmission bearer based on the General Packet Radio Service Tunneling Protocol-User Plane (GTP-U) protocol. To establish this user plane connection, corresponding control plane signaling flows and messages need to be designed in the F1AP protocol of the F1-C interface. As shown in FIG. 49, the control plane signaling flow and messages include the following:
1: The gNB-CU llsends an F1 UP Connection Establishment Request message (as an example of the first connection establishment request message, for example, an F1 UP Connection Establishment Request message) to the gNB-DU. The F1 UP Connection Establishment Request message includes at least one of the following: identification or address information of the gNB-CU and/or gNB-DU nodes of the RAN, and resource-related information for the user plane (F1 UP) connection between the gNB-CU and the gNB-DU on the F1-U interface. The resource-related information for the F1 UP connection on the F1-U interface includes at least one of the following: endpoint information of the gNB-CU for the transport bearer, a service type or function type, a service data rate, and service Quality of Service (QoS) related information.
2: The gNB-DU sends an F1 UP Connection Establishment Response message (as an example of the first connection establishment response message) to the gNB-CU. The F1 UP Connection Establishment Response message includes at least one of the following: identification or address information of the gNB-CU and/or gNB-DU nodes of the Radio Access Network, and resource-related information for the user plane (F1 UP) connection between the gNB-CU and the gNB-DU on the F1-U interface. The resource-related information for the F1 UP connection on the F1-U interface includes at least endpoint information of the gNB-DU for the transport bearer.

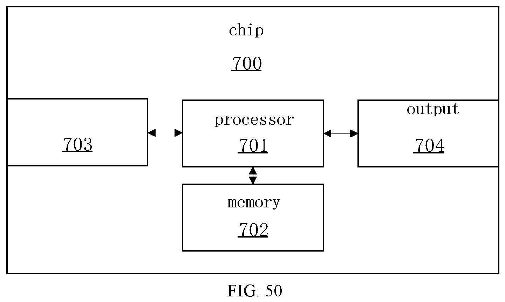

Referring to FIG. 50, an embodiment of the present application also provides a chip 700. The chip 700 can implement the corresponding processes performed by an entity such as a user equipment (for example, UE 10a, UE 10b, UE 10, UE1, UE2, to UEn), a network node (for example, RAN 20, NWDAF 30a, AMF 30b, SMF 30c, UPF 30d, RSMF 10e, RSMF 10f), or a DN 40, as described in the methods of the embodiments of the present application. The chip 700 includes a processor 701, which can call and run a computer program from a memory to implement the methods provided in the embodiments of the present application.

Optionally, the chip 700 may further include a memory 702. The processor 701 can call and run a computer program from the memory 702 to implement the methods provided in the embodiments of the present application.

The memory 702 may be a separate device independent of the processor 701, or may be integrated into the processor 701.

Optionally, the chip 700 may further include an input interface 703. The processor 701 can control the input interface 703 to communicate with other devices or chips, and specifically, to obtain messages or data sent from other devices or chips.

Optionally, the chip 700 may further include an output interface 704. The processor 701 can control the output interface 704 to communicate with other devices or chips, and specifically, to output messages or data to other devices or chips.

A person of ordinary skill in the art will understand that the foregoing embodiments are specific implementations of the present application, and that in practice, various modifications in form and detail may be made thereto without departing from the spirit and scope of the present application.

## Claims

1. A data transmission method, performed in a first network node of a Radio Access Network (RAN), wherein the method comprises:
receiving a first connection establishment request message related to a first data transmission bearer, for establishing the first data transmission bearer, wherein the first connection establishment request message comprises identification information of a non-User Equipment (UE) associated service type or function type, or identification information of a plurality of UEs, the first data transmission bearer is used for transmitting data between the first network node and a second network node, and the data is data related to the service type or the function type, or data related to the plurality of UEs in the RAN; and
sending a first connection establishment request response message associated with the first data transmission bearer, to establish the first data transmission bearer between the first network node of the RAN and the second network node.

2. The data transmission method according to claim 1, wherein the first network node is a base station or a base station Distributed Unit (DU) of the RAN;
the second network node is a User Plane Function (UPF) of a Core Network, a base station of the RAN, or a base station Centralized Unit (CU) of the RAN.

3. The data transmission method according to claim 1, wherein the first data transmission bearer is a user plane transmission bearer and is a transmission bearer based on a General Packet Radio Service Tunneling Protocol-User Plane (GTP-U) protocol.

4. The data transmission method according to claim 1, wherein the first connection establishment request message further comprises at least one of the following information:
identification or address information of the first network node;
identification or address information of the second network node of the Core Network or the Radio Access Network;
endpoint information of the second network node for a transmission bearer related to the first data transmission bearer; and
data rate and Quality of Service (QoS) requirement information related to the first data transmission bearer.

5. The data transmission method according to claim 1, wherein the first connection establishment request response message comprises at least one of the following information:
identification or address information of the first network node;
identification or address information of the second network node; and
endpoint information of the first network node for a transmission bearer related to the first data transmission bearer.

6. A data transmission method, performed in a data transmission system, wherein the method comprises:
a third network node sending a first connection establishment request message related to a first data transmission bearer to a first network node, to establish the first data transmission bearer between the first network node and a second network node, wherein the first connection establishment request message comprises identification information of a non-UE associated service type or function type, or identification information of a plurality of UEs; the first network node sending a first connection establishment request response message related to the first data transmission bearer to the third network node;
the third network node sending a second connection establishment request message related to the first data transmission bearer, a second data transmission bearer, and/or a third data transmission bearer to a fourth network node, wherein the second data transmission bearer is used for representing a bearer between the second network node and a fifth network node, the third data transmission bearer is used for representing a bearer between the second network node and a sixth network node, and the first data transmission bearer, the second data transmission bearer, and the third data transmission bearer are all used for transmitting data related to the non-UE associated service type or function type, or data of the plurality of UEs;
the fourth network node sending a third connection establishment request message related to the first data transmission bearer to the third network node; and
the fourth network node sending a fourth connection establishment request message related to the first data transmission bearer, the second data transmission bearer, and/or the third data transmission bearer to the second network node, to establish the first data transmission bearer, the second data transmission bearer, and/or the third data transmission bearer.

7. The data transmission method according to claim 6, wherein the method further comprises:
the fourth network node sending a fifth connection establishment request message related to the second data transmission bearer to the fifth network node, to establish the second data transmission bearer.

8. The data transmission method according to claim 7, wherein the method further comprises:
the first network node sending a first connection establishment response message to the third network node;
the fourth network node sending a second connection establishment response message related to the first data transmission bearer, the second data transmission bearer, and/or the third data transmission bearer to the third network node;
the third network node sending a third connection establishment response message related to the first data transmission bearer to the fourth network node;
the second network node sending a fourth connection establishment response message related to the first data transmission bearer, the second data transmission bearer, and/or the third data transmission bearer to the fourth network node; and
the fifth network node sending a fifth connection establishment response message related to the second data transmission bearer to the fourth network node.

9. The data transmission method according to claim 6, wherein the method further comprises:
the fourth network node sending a fourth connection establishment complete message related to the first data transmission bearer, the second data transmission bearer, and/or the third data transmission bearer to the second network node, to complete establishing the first data transmission bearer, the second data transmission bearer, and/or the third data transmission bearer.

10. The data transmission method according to claim 6, wherein the first network node is a base station of a Radio Access Network (RAN);
the second network node is a User Plane Function (UPF);
the third network node is an Access and Mobility Management Function (AMF);
the fourth network node is a Session Management Function (SMF);
the fifth network node is a Core Network Service Management Function (CNSMF); and/or
the sixth network node is a network node of a Data Network (DN).

11. The data transmission method according to claim 6, wherein the method further comprises: the third network node receiving a service establishment request message related to the first data transmission bearer, the second data transmission bearer, and/or the third data transmission bearer from the first network node or the fifth network node, wherein the service establishment request message comprises identification information of the service type or the function type, or identification information of the plurality of UEs.

12. The data transmission method according to claim 7, wherein the second connection establishment request message, the third connection establishment request message, the fourth connection establishment request message, and the fifth connection establishment request message comprise identification information of the service type or the function type, or identification information of the plurality of UEs.

13. The data transmission method according to claim 6, wherein the first data transmission bearer is a user plane transmission bearer; wherein the user plane transmission bearer is a transmission bearer based on a General Packet Radio Service Tunneling Protocol-User Plane (GTP-U) protocol.

14. The data transmission method according to claim 6, wherein the second data transmission bearer is a user plane transmission bearer; wherein the user plane transmission bearer is a transmission bearer based on a GTP-U protocol, a transmission bearer based on a Transmission Control Protocol (TCP) protocol, or a transmission bearer based on a Hypertext Transfer Protocol (HTTP) protocol.

15. The data transmission method according to claim 6, wherein the third data transmission bearer is a user plane transmission bearer; wherein the user plane transmission bearer is a transmission bearer based on a GTP-U protocol, a transmission bearer based on a TCP protocol, a transmission bearer based on a User Datagram Protocol (UDP) protocol, or a transmission bearer based on a Hypertext Transfer Protocol Secure (HTTPS) protocol.

16. The data transmission method according to claim 10, wherein the second connection establishment request message comprises at least one of: identification or address information related to the network node of the Radio Access Network (RAN), identification or address information related to the Access and Mobility Management Function (AMF), identification or address information of the Session Management Function (SMF), identification or address information related to the CNSMF network node, identification or address information of the User Plane Function (UPF), identification or address information related to the Data Network (DN), and service-related information of the first data transmission bearer, the second data transmission bearer, and/or the third data transmission bearer;
the third connection establishment request message comprises at least one of: identification or address information related to the network node of the RAN, identification or address information related to the AMF, identification or address information of the SMF, identification or address information of the UPF, endpoint information of the UPF for the first data transmission bearer, and/or service-related information;
the fourth connection establishment request message comprises at least one of: identification or address information related to a network node of the Radio Access Network (RAN), identification or address information of the Core Network Service Management Function (CNSMF), identification or address information related to the Access and Mobility Management Function (AMF), identification or address information of the Session Management Function (SMF), identification or address information of the User Plane Function (UPF), identification or address information related to the Data Network (DN), endpoint information of the base station for the first data transmission bearer, endpoint information of the CNSMF for the second data transmission bearer, endpoint information of the DN for the third data transmission bearer, and/or service-related information of the data transmission bearer;
the first connection establishment request message comprises at least one of: identification or address information related to a network node of the RAN, identification or address information related to the AMF, identification or address information of the SMF, identification or address information of the UPF, endpoint information of the UPF for the first data transmission bearer, and/or service-related information; and
the fifth connection establishment request message comprises at least one of: identification or address information related to a network node of the RAN, identification or address information related to the AMF, identification or address information of the UPF, identification or address information of the SMF, identification or address information of the CNSMF, endpoint information of the UPF for the second data transmission bearer, and/or service-related information of the data transmission bearer.

17. The data transmission method according to claim 16, wherein the service-related information of the data transmission bearer comprises at least one of: a service type or a function type, a service data rate, and information related to Quality of Service (QoS).

18. The data transmission method according to claim 8, wherein the second connection establishment response message comprises at least one of: identification or address information related to a network node of the RAN, identification or address information related to the AMF, identification or address information of the SMF, identification or address information of the UPF, endpoint information of the UPF for the first data transmission bearer, and/or service-related information of the data transmission bearer; the third connection establishment response message comprises at least: endpoint information of the base station for the first data transmission bearer;
the fourth connection establishment response message comprises at least: endpoint information of the UPF for the first data transmission bearer, endpoint information of the UPF for the second data transmission bearer, and/or endpoint information of the UPF for the third data transmission bearer;
the first connection establishment response message comprises at least: endpoint information of the base station for the first data transmission bearer; and/or
the fifth connection establishment response message comprises at least: endpoint information of the CNSMF for the second data transmission bearer.

19. The data transmission method according to claim 9, wherein the fourth connection establishment complete message comprises at least: endpoint information of the base station for the first data transmission bearer, endpoint information of the CNSMF for the second data transmission bearer, and/or endpoint information of the DN for the third data transmission bearer.

20. The data transmission method according to claim 6, wherein in a downlink direction, the method further comprises:
data related to at least two UEs being mapped by the RAN to a Data Radio Bearer (DRB) of a Uu interface of the at least two UEs; and
data related to the at least two UEs being transmitted via the DRB; wherein the data related to the at least two UEs is transmitted via the first data transmission bearer; and/or
in an uplink direction, the method further comprises: the first network node selecting one UE from the at least two UEs, mapping the Data Radio Bearer and data of a Uu interface of the selected UE to the first data transmission bearer, and transmitting the data of the selected UE via the first data transmission bearer.

21. The data transmission method according to claim 20, wherein in the uplink direction, the method further comprises:
the first network node selecting one UE from the at least two UEs, and mapping at least one DRB of the selected UE to at least one Quality of Service (QoS) flow related to the first data transmission bearer; and
sending a Service Data Unit (SDU) carried by the at least one DRB to the corresponding QoS flow.

22. The data transmission method according to claim 21, wherein the method further comprises:
the first network node measuring an uplink transmission quality of the at least two UEs to obtain a measurement result.

23. The data transmission method according to claim 22, wherein for the selected UE, when the measurement result is lower than a predetermined value, the method further comprises: the first network node triggering a UE reselection process, wherein the UE reselection process comprises: reselecting a UE corresponding to a best measurement result, and mapping data carried by at least two DRBs of the reselected UE to a QoS flow corresponding to the DRBs.

24. A data transmission method, performed in a first network node of a Radio Access Network (RAN), wherein the method comprises:
receiving or sending a protocol transmission message; wherein a Protocol Data Unit (PDU) is carried in the protocol transmission message, and both a type of the protocol transmission message and a type of the PDU have a corresponding relationship with a service type or a function type.

25. The data transmission method according to claim 24, wherein the protocol transmission message comprises a message type element, and the message type element is used for indicating the service type or the function type corresponding to the protocol transmission message.

26. The data transmission method according to claim 24, wherein the protocol transmission message comprises a message type element and a service type element, and the service type element is used for indicating the service type or the function type corresponding to the protocol transmission message.

27. The data transmission method according to claim 26, wherein the protocol transmission message is a User Equipment (UE) associated or non-UE associated protocol transmission message, wherein whether the protocol transmission message is UE associated or non-UE associated is indicated by the message type element in the protocol transmission message.

28. The data transmission method according to claim 26, wherein whether the protocol transmission message is received or sent is indicated by the message type element in the protocol transmission message.

29. The data transmission method according to claim 27, wherein the UE associated protocol transmission message further comprises identification information of the UE in the first network node and identification information of the UE in a network node for access and mobility management.

30. The data transmission method according to claim 24, wherein the protocol transmission message further comprises routing identification information, wherein the routing identification information is used to identify a network node for service management in a Core Network corresponding to the service type or the function type.

31. The data transmission method according to claim 30, wherein the first network node is a base station of the RAN;
a base station of the RAN;
the network node for access and mobility management is an Access and Mobility Management Function (AMF); and the network node for service management is a Core Network Service Management Function (CNSMF).

32. A network node, comprising:
a processor, configured to call and execute a computer program stored in a memory to cause a device in which the processor is installed to perform the method of any one of claims 1 to 31.

33. A chip, comprising:
a processor, configured to call and execute a computer program stored in a memory to cause a device in which the processor is installed to perform the method of any one of claims 1 to 31.

34. A computer-readable storage medium, wherein a computer program is stored thereon, wherein the computer program causes a computer to perform the method of any one of claims 1 to 31.

35. A computer program product, comprising a computer program, wherein the computer program causes a computer to perform the method of any one of claims 1 to 31.

36. A data transmission system, comprising:
a first network node, a second network node, a third network node, a fourth network node, and a fifth network node, wherein,
the first network node is configured to receive a first connection establishment request message related to a first data transmission bearer, wherein the first data transmission bearer is used for representing a bearer between the first network node and the second network node;
the second network node is configured to receive a fourth connection establishment request message related to the first data transmission bearer, a second data transmission bearer, and/or a third data transmission bearer; wherein the second data transmission bearer is used for representing a bearer between the second network node and the fifth network node, and the third data transmission bearer is used for representing a bearer between the second network node and a sixth network node;
the third network node is configured to send the first connection establishment request message related to the first data transmission bearer to the first network node, to establish the first data transmission bearer between the first network node and the second network node, wherein the first connection establishment request message comprises identification information of a non-UE associated service type or function type, or identification information of a plurality of UEs; the first network node sends a first connection establishment request response message related to the first data transmission bearer to the third network node; the third network node sends a second connection establishment request message related to the first data transmission bearer, the second data transmission bearer, and/or the third data transmission bearer to the fourth network node, wherein the first data transmission bearer, the second data transmission bearer, and the third data transmission bearer are all used for transmitting data related to the non-UE associated service type or function type, or data of the plurality of UEs;
the fourth network node is configured to send a third connection establishment request message related to the first data transmission bearer to the third network node, send the fourth connection establishment request message related to the first data transmission bearer, the second data transmission bearer, and/or the third data transmission bearer to the second network node to establish the first data transmission bearer, the second data transmission bearer, and/or the third data transmission bearer, and send a fifth connection establishment request message related to the second data transmission bearer to the fifth network node to establish the second data transmission bearer; and
the fifth network node is configured to receive the fifth connection establishment request message related to the second data transmission bearer.
